(19) Europäisches Patentamt

European Patent Office

Office européen des brevets

(11) **EP 1 606 798 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(21) Anmeldenummer: **04721523.1**

(22) Anmeldetag: **18.03.2004**

(51) Int Cl.:
***G10L 21/02*** (2006.01)

(86) Internationale Anmeldenummer:
**PCT/EP2004/002846**

(87) Internationale Veröffentlichungsnummer:
**WO 2004/084186 (30.09.2004 Gazette 2004/40)**

(54) **VORRICHTUNG UND VERFAHREN ZUM ANALYSIEREN EINES AUDIO-INFORMATIONSSIGNALS**

DEVICE AND METHOD FOR ANALYSING AN AUDIO INFORMATION SIGNAL

DISPOSITIF ET PROCEDE POUR ANALYSER UN SIGNAL D'INFORMATION AUDIO

(84) Benannte Vertragsstaaten:
**AT CH FR GB LI**

(30) Priorität: **21.03.2003 DE 10313875**

(43) Veröffentlichungstag der Anmeldung:
**21.12.2005 Patentblatt 2005/51**

(73) Patentinhaber: **Fraunhofer-Gesellschaft zur Förderung der angewandten Forschung e.V. 80686 München (DE)**

(72) Erfinder:
 • **UHLE, Christian**
   **98693 Ilmenau (DE)**
 • **DITTMAR, Christian**
   **98693 Ilmenau (DE)**
 • **SPORER, Thomas**
   **90766 Fürth (DE)**

(74) Vertreter: **Zinkler, Franz et al**
**Schoppe, Zimmermann, Stöckeler & Zinkler**
**Postfach 246**
**82043 Pullach bei München (DE)**

(56) Entgegenhaltungen:
**FR-A- 2 842 014**

 • **MARTIN A ET AL: "Robust speech/non-speech detection using LDA applied to MFCC" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY: IEEE, US, Bd. 1 OF 6, 7. Mai 2001 (2001-05-07), Seiten 237-240vol1, XP002245514 ISBN: 0-7803-7041-4**
 • **NITTA T: "FEATURE EXTRACTION FOR SPEECH RECOGNITION BASED ON ORTHOGONAL ACOUSTIC-FEATURE PLANES AND LDA" 1999 IEEE INTERNATIONAL CONFERENCE ON ACOUSTICS, SPEECH, AND SIGNAL PROCESSING. PHOENIX, AZ, MARCH 15 - 19, 1999, IEEE INTERNATIONAL CONFERENCE ON ACOUSTICS, SPEECH, AND SIGNAL PROCESSING (ICASSP), NEW YORK, NY: IEEE, US, Bd. 1, 15. März 1999 (1999-03-15), Seiten 421-424, XP000900147 ISBN: 0-7803-5042-1**
 • **LILLY B T ET AL: "Robust speech recognition using singular value decomposition based speech enhancement" TENCON '97. IEEE REGION 10 ANNUAL CONFERENCE. SPEECH AND IMAGE TECHNOLOGIES FOR COMPUTING AND TELECOMMUNICATIONS., PROCEEDINGS OF IEEE BRISBANE, QLD., AUSTRALIA 2-4 DEC. 1997, NEW YORK, NY, USA,IEEE, US, 2. Dezember 1997 (1997-12-02), Seiten 257-260, XP010264234 ISBN: 0-7803-4365-4**

- CASEY M: "MPEG-7 SOUND-RECOGNITION TOOLS" IEEE TRANSACTIONS ON CIRCUITS AND SYSTEMS FOR VIDEO TECHNOLOGY, IEEE INC. NEW YORK, US, Bd. 11, Nr. 6, Juni 2001 (2001-06), Seiten 737-747, XP001059866 ISSN: 1051-8215
- ZHU LIU ET AL: "AUDIO FEATURE EXTRACTION AND ANALYSIS FOR SCENE SEGMENTATION AND CLASSIFICATION" JOURNAL OF VLSI SIGNAL PROCESSING SYSTEMS FOR SIGNAL, IMAGE, AND VIDEO TECHNOLOGY, KLUWER ACADEMIC PUBLISHERS, DORDRECHT, NL, Bd. 20, Nr. 1/2, 1. Oktober 1998 (1998-10-01), Seiten 61-78, XP000786728 ISSN: 0922-5773
- TSOUKALAS D ET AL: "Speech enhancement using psychoacoustic criteria" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, Bd. 4, 27. April 1993 (1993-04-27), Seiten 359-362, XP010110468 ISBN: 0-7803-0946-4
- FINK F K ET AL: "SVD BASED PARAMETER ESTIMATION AS NOISE ROBUST PREPROCESSING FOR SPEECH RECOGNITION" SIGNAL PROCESSING THEORIES AND APPLICATIONS. BRUSSELS, AUG. 24 - 27, 1992, PROCEEDINGS OF THE EUROPEAN SIGNAL PROCESSING CONFERENCE (EUSIPCO), AMSTERDAM, ELSEVIER, NL, Bd. 1 CONF. 6, 24. August 1992 (1992-08-24), Seiten 395-398, XP000348684 ISBN: 0-444-89587-6
- MOKBEL C ET AL: "Towards improving ASR robustness for PSN and GSM telephone applications" SPEECH COMMUNICATION, ELSEVIER SCIENCE PUBLISHERS, AMSTERDAM, NL, Bd. 23, Nr. 1-2, 1. Oktober 1997 (1997-10-01), Seiten 141-159, XP004117215 ISSN: 0167-6393

**Beschreibung**

Die vorliegende Erfindung bezieht sich auf die Analyse von Informationssignalen, wie beispielsweise Audiosignalen, und insbesondere auf die Analyse von Informationssignalen, die aus einer Überlagerung von Teilsignalen bestehen, wobei ein Teilsignal von einer Einzelquelle stammt.

Die fortschreitende Entwicklung digitaler Distributionsmedien für multimediale Inhalte führt zu einer großen Vielfalt angebotener Daten. Für den menschlichen Nutzer ist die Grenze des Überschaubaren dabei längst überschritten. So gewinnt die inhaltliche Beschreibung der Daten durch Metadaten zunehmend an Bedeutung. Grundsätzlich besteht das Ziel, nicht nur Text-Dateien sondern auch z. B. Musikdateien, Videodateien oder sonstige Informationssignaldateien durchsuchbar zu machen, wobei derselbe Komfort wie bei gängigen Textdatenbanken angestrebt wird. Ein Ansatz hierfür ist der bekannte MPEG 7-Standard.

Insbesondere bei der Analyse von Audiosignalen, also Signalen, die Musik und/oder Sprache umfassen, ist die Extraktion von Fingerabdrücken von großer Bedeutung.

Angestrebt wird ferner, Audiodaten mit Metadaten "anzureichern", um für z. B. ein Musikstück auf der Basis eines Fingerabdrucks Metadaten wiederzugewinnen. Der "Fingerabdruck" soll einerseits aussagekräftig sein, und andererseits möglichst kurz und prägnant sein. "Fingerabdruck" bezeichnet somit ein aus einem Musik-Signal generiertes komprimiertes Informationssignal, welches nicht die Metadaten enthält, sondern zur Referenzierung auf die Metadaten z.B. durch Suche in einer Datenbank dient, z.B. in einem System zur Identifikation von Audiomaterial ("AudioID").

Normalerweise bestehen Musikdaten aus der Überlagerung von Teilsignalen von Einzelquellen. Während es bei einer Popmusik typischerweise relativ wenige Einzelquellen gibt, nämlich den Sänger, die Gitarre, die Baßgitarre, das Schlagzeug und ein Keyboard, so kann die Anzahl von Quellen für ein Orchesterstück sehr groß werden. Ein Orchesterstück und ein Popmusikstück beispielsweise bestehen aus einer Überlagerung der von den einzelnen Instrumenten abgegebenen Töne. Ein Orchesterstück bzw. irgendein Musikstück stellt somit eine Überlagerung von Teilsignalen von einzelnen Quellen dar, wobei die Teilsignale die von den einzelnen Instrumenten des Orchesters bzw. Popmusikensembles erzeugten Töne sind, und wobei die einzelnen Instrumente Einzelquellen sind.

Alternativ können auch Gruppen von ursprünglichen Quellen als Einzelquellen aufgefasst werden, so dass einem Signal wenigstens zwei Einzelquellen zugewiesen werden können.

Eine Analyse eines allgemeinen Informationssignals wird nachfolgend lediglich beispielhaft anhand eines Orchestersignals dargestellt. Die Analyse eines Orchestersignals kann auf vielerlei Arten und Weisen durchgeführt werden. So kann der Wunsch bestehen, die einzelnen Instrumente zu erkennen und aus dem Gesamtsignal die Einzelsignale der Instrumente zu extrahieren und gegebenenfalls in eine Notenschrift umzusetzen, wobei die Notenschrift als "Metadaten" fungieren würde. Weitere Möglichkeiten der Analyse bestehen darin, einen dominanten Rhythmus zu extrahieren, wobei eine Rhythmusextraktion auf der Basis der Schlaginstrumente besser vonstatten geht als auf der Basis der eher Ton-gebenden Instrumente, die auch als harmonisch-ausgehaltene oder "harmonic sustained" Instrumente bezeichnet werden. Während Schlaginstrumente typischerweise Pauken, Schlagzeuge, Rassein oder sonstige Percussion-Instrumente umfassen, gehören zu den harmonisch ausgehaltenen Instrumenten alle sonstigen Instrumente, wie beispielsweise Geigen, Blasinstrumente, etc.

Weiterhin werden zu den Schlaginstrumenten alle jene akustischen oder synthetischen Klangerzeuger gezählt, die aufgrund ihrer Klangeigenschaften zur Rhythmussektion beitragen (z.B. Rhythmusgitarre).

So wäre es beispielsweise zur Rhythmusextraktion eines Musikstücks wünschenswert, aus dem gesamten Musikstück lediglich percussive Anteile zu extrahieren und eine Rhythmuserkennung dann auf der Basis dieser percussiven Anteile durchzuführen, ohne daß die Rhythmuserkennung durch Signale von den harmonisch ausgehaltenen Instrumenten "gestört" wird.

Andererseits wird jegliche Analyse mit dem Ziel der Extraktion von Metadaten, die ausschließlich Informationen der harmonisch ausgehaltenen Instrumente benötigt (z.B. eine harmonische oder melodische Analyse), profitieren von einer vorgeschalteten Separation und einer Weiterverarbeitung der harmonisch ausgehaltenen Anteile.

In jüngster Vergangenheit wurde in diesem Zusammenhang über die Verwendung der Technik der Blind Source Separation (BSS) und der Independent Component Analysis (ICA) zur Signalverarbeitung und Signalanalyse berichtet. Einsatzgebiete finden sich insbesondere in der biomedizinischen Technik, der Kommunikationstechnik, der künstlichen Intelligenz und der Bildverarbeitung.

Allgemein umfaßt der Begriff BSS Techniken zur Separation von Signalen aus einem Mix von Signalen mit einem Minimum an Vorkenntnissen über die Natur der Signale und des Mischungsprozesses. Die ICA ist ein Verfahren, welches sich der Annahme bedient, daß die einem Mix zugrundeliegenden Quellen zumindest bis zu einem gewissen Grad statistisch unabhängig voneinander sind. Weiterhin wird der Mischungsprozeß als zeitlich unveränderlich und die Anzahl der beobachteten Mischsignale nicht kleiner als die Anzahl der der Mischung zugrundeliegenden Quellsignale angenommen.

Eine Erweiterung der ICA stellt die Independent Subspace Analysis (ISA) dar, die die Einschränkung der statistischen Unabhängigkeit der Quellen lockert. Hier werden die Komponenten unterteilt in unabhängige Unterräume oder Subspaces, deren Komponenten nicht statistisch unabhängig sein müssen. Durch eine Transformation des Musiksignals wird eine mehrdimensionale Darstellung des Mischsignals ermittelt und der letzten Annahme für die ICA entsprochen. Verschiedene Verfahren zur Berechnung der unabhängigen Komponenten wurden in den letzten Jahren entwickelt. Einschlägige Literaturstellen, die sich zum Teil auch mit der Analyse von Audiosignalen beschäftigen, sind folgende:

1. J. Karhunen, "Neural approaches to independent component analysis and source separation", Proceedings of the European Symposium on Artificial Neural Networks, S. 249-266, Bruges, 1996.

2. M.A. Casey and A. Westner, "Separation of Mixed Audio Sources by Independent Subspace Analysis", Proceedings of the International Computer Music Conference, Berlin, 2000.

3. J.-F. Cardoso, "Multidimensional independent component analysis", Proceedings of ICASSP'98, Seattle, 1998.

4. A. Hyvärinen, P.O. Hoyer and M. Inki, "Topographic Independent analysis", Neural Computation, 13(7), S. 1525-1558, 2001.

5. S. Dubnov, "Extracting Sound Objects by Independent Subspace Analysis" Proceedings of AES 22nd International Conference on Virtual, Synthetic and Entertainment Audio, Helsinki, 2002.

6. J.-F. Cardoso and A. Souloumiac, "Blind beamforming for non Gaussian signals" IEE Proceedings, Bd. 140, Nr. 6, S. 362-370, 1993.

Die zweite vorstehend genannte Veröffentlichung von Casey sei nachfolgend beispielhaft für den Stand der Technik dargestellt. Diese Veröffentlichung beschreibt ein Verfahren zum Trennen von gemischten Audioquellen durch die Technik der unabhängigen Unterraumanalyse. Hierzu wird unter Verwendung von BSS-Techniken ein Audiosignal in einzelne Komponentensignale aufgesplittet. Zum Feststellen, welche der einzelnen Komponentensignale zu einem Multikomponenten-Unterraum gehören, wird eine Gruppierung dahingehend durchgeführt, daß die Ähnlichkeit der Komponenten untereinander durch ein sogenanntes Ixegramm dargestellt wird. Das Ixegramm wird als Kreuzentropie-Matrix der unabhängigen Komponenten untereinander bezeichnet. Es wird dadurch berechnet, daß alle einzelnen Komponentensignale paarweise in einer Korrelationsberechnung untersucht werden, um ein Maß dafür zu finden, wie ähnlich zwei Komponenten sind. Über allen Komponentensignalen wird daher eine erschöpfende paarweise Ähnlichkeitsberechnung durchgeführt, so daß sich eine Ähnlichkeitsmatrix ergibt, bei der entlang einer y-Achse alle Komponentensignale aufgetragen werden, und bei der ferner entlang der x-Achse ebenfalls alle Komponentensignale aufgetragen werden. Dieses zweidimensionale Array liefert für jedes Komponentensignal ein Ähnlichkeitsmaß mit jeweils einem anderen Komponentensignal. Das Ixegramm, also die zweidimensionale Matrix, wird nun dazu verwendet, ein Clustering durchzuführen, wobei hierzu eine Gruppierung unter Verwendung eines Cluster-Algorithmus auf der Basis von diadischen Daten durchgeführt wird. Um eine optimale Partitionierung des Ixegramms in k Klassen durchzuführen, wird eine Kostenfunktion definiert, die die Kompaktheit innerhalb eines Clusters mißt und die Homogenität zwischen Clustern bestimmt. Die Kostenfunktion wird minimiert, so daß sich letztendlich eine Zuordnung von einzelnen Komponenten zu einzelnen Unterräumen ergibt. Angewendet auf ein Signal, das einen Sprecher im Kontext eines durchgehenden Wasserfallrauschens darstellt, ergibt sich als Unterraum der Sprecher, wobei das rekonstruierte Informationssignal des Sprecher-Unterraums eine signifikante Dämpfung des Wasserfallrauschens zeigt.

Ein weiteres Beispiel finder sich in Martin et al.: Robust Speech/Non-Speech Detection Using LDA applied to MFCC, KASSP 2001, S. 237-240, Mai 2001.

Nachteilig an den beschriebenen Konzepten ist die Tatsache, daß sehr wahrscheinlich der Fall auftritt, daß die Signalanteile einer Quelle auf verschiedenen Komponentensignalen zu liegen kommen. Dies ist der Grund dafür, daß, wie es vorstehend ausgeführt worden ist, eine komplexe und rechenzeitintensive Ähnlichkeitsberechnung unter allen Komponentensignalen durchgeführt wird, um die zweidimensionale Ähnlichkeitsmatrix zu erhalten, auf der Basis derer dann mittels einer zu minimierenden Kostenfunktion letztendlich eine Einteilung von Komponentensignalen in Unterräume durchgeführt wird.

Des weiteren nachteilhaft ist, daß in dem Fall, in dem mehrere einzelne Quellen vorliegen, also wo das Ausgangssignal nicht a priori bekannt ist, zwar nach längerer Rechnung eine Ähnlichkeitsverteilung vorliegt, daß jedoch die Ähnlichkeitsverteilung selbst noch keinen tatsächlichen Einblick in die tatsächliche Audioszene liefert. So weiß der Betrachter lediglich, daß bestimmte Komponentensignale zueinander im Hinblick auf die minimierte Kostenfunktion ähnlich sind. Er weiß jedoch nicht, welche Informationen diese letztendlich erhaltenen Unterräume tragen bzw. welche ursprüngliche Einzelquelle oder welche Gruppe von Einzelquellen durch einen Unterraum dargestellt werden.

Die Aufgabe der vorliegenden Erfindung besteht darin, ein effizienteres und intuitiveres Konzept zum Analysieren von Informationssignalen zu schaffen.

Diese Aufgabe wird durch eine Vorrichtung zum Analysieren eines Informationssignals nach Patentanspruch 1, ein Verfahren zum Analysieren eines Informationssignals nach Patentanspruch 27 oder ein Computer-Programm nach Patentanspruch 28 gelöst.

Der vorliegenden Erfindung liegt die Erkenntnis zugrunde, daß von der aufwendigen paarweisen Ähnlichkeitsanalyse der Komponentensignale weggegangen werden muß, um zu einem effizienteren Konzept zu kommen. Statt dessen wird eine Zuordnung der Komponentensignale zu einzelnen Unterräumen auf der Basis eines Merkmals oder Features durchgeführt, das für jedes Komponentensignal berechnet wird. So kommen solche Komponentensignale in einen Unterraum, deren Features ein bestimmtes Kriterium, wie z. B. kleiner als eine Schwelle zu sein, erfüllen. Andere Komponentensignale, deren Features ein anderes Kriterium erfüllen oder das vorgenannte Kriterium nicht erfüllen, kommen dann in den anderen Unterraum.

Alternativ dazu kann die Zuordnung der Komponentensignale zu den Unterräumen mittels eines herkömmlichen Klassifikationsapparates geschehen, der eine Zuordnung nicht nur auf der Basis eines Merkmals sondern anhand der Gesamtheit der zur Verfügung stehenden Merkmale (Features) vornimmt. Als Klassifikationsapparat kommen alle bekannten Klassifikationsapparate in Betracht, die mehrdimensionale Merkmalsvektoren verarbeiten können (Nearest- Neighbor, k-Nearest-Neighbor, Fuzzy-Klassifikator, Neuronale Netze, Bayes-Klassifikator, hierarchische Klassifikatoren, ...).

Damit wird bereits eine einfache, jedoch effizient durchführbare Klassifikation der Komponentensignale in Unterräume erreicht. Durch die Möglichkeit der Vorgabe des Merkmals ergeben sich ferner zwei weitere wichtige Vorteile. Der eine Vorteil besteht darin, ein an eine Audioszene bzw. an erwünschte Eigenschaften angepaßtes Merkmal vorzugeben. Wird ein Merkmal vorgegeben, das eindeutig beispielsweise mit einer Percussivität, also mit einer Klangeigenschaft von Schlaginstrumenten, korreliert ist, so kann ohne weiteres eine Einteilung der Komponentensignale in nicht- percussive und percussive Komponentensignale völlig ohne Kenntnis des Stücks selbst erreicht werden. Die Extraktion von percussiven Komponentensignalen ist besonders für eine anschließende Rhythmusextraktion von Bedeutung.

Wird eine Extraktion von Teilsignalen einer speziellen Einzelquelle oder von einer Gruppe von Einzelquellen erwünscht, so kann dies ohne weiteres dadurch geschehen, daß ein anderes Merkmal vorgegeben wird, das mit dem Teilsignal von der gesuchten Einzelquelle korreliert ist oder das mit Teilsignalen einer Gruppe von Einzelquellen korreliert ist, je nach dem was gewünscht wird.

Der andere Vorteil der Möglichkeit der Vorgabe des Merkmals besteht darin, daß der Aufwand ohne weiteres skalierbar ist. Für eine lediglich grobe z. B. Percussivitätsextraktion genügt es bereits, ein Merkmal vorzugeben, das einigermaßen mit der percussiven Eigenschaft einer Quelle korreliert ist. Typischerweise wird dieses Merkmal relativ einfach im Rechenaufwand zu implementieren sein, so daß sich eine schnelle Informationssignalanalyse bewerkstelligen läßt. Ist die Schnelligkeit dagegen nicht von entscheidender Bedeutung, so können beliebig komplizierte Merkmale oder Merkmalskombinationen vorgegeben werden, die dafür eine höhere Korrelation zu einer Einzelquelle bzw. einer gesuchten Gruppe von Einzelquellen haben.

Die Tatsache der Vorgabe des Merkmals, also des Untersuchens der Komponentensignale anhand eines von außen vorgegebenen "normals" anstatt einer Beurteilung der Komponentensignale untereinander und der anschließenden Minimierung einer Kostenfunktion liefert ferner eine höhere Intuition dahingehend, daß unmittelbar nach der Zuordnung der Komponentensignale zu den einzelnen Unterräumen Informationen über die Audioszene dahingehend klar sind, daß ein Benutzer anhand der in den Unterräumen befindlichen Komponentensignale bereits einen Einblick in die Audioszene hat, da er das Merkmal, aufgrund dessen die Einteilung in die Unterräume stattfand, bereits abhängig von den ihn interessierenden Eigenschaften der Audioszene vorgegeben hatte.

Bevorzugte Ausführungsbeispiele der vorliegenden Erfindung werden nachfolgend Bezug nehmend auf die beiliegenden Zeichnungen detailliert erläutert. Es zeigen:

Fig. 1     ein Blockschaltbild des erfindungsgemäßen Konzepts zum Analysieren eines Informationssignals;

Fig. 2     ein Blockschaltbild eines Verfahrens gemäß einem bevorzugten Ausführungsbeispiel der vorliegenden Erfindung;

Fig. 3a     eine Gegenüberstellung einer tatsächlichen Amplitudenhüllkurve und einer Modellhüllkurve für ein harmonisch ausgehaltenes Komponentensignal;

Fig. 3b     eine Gegenüberstellung einer tatsächlichen Amplitudenhüllkurve und einer Modell-Amplitudenhüllkurve für ein percussives Komponentensignal;

Fig. 4a     eine Gegenüberstellung eines tatsächlichen Frequenzspektrums und eines Modellspektrums für ein harmonisch-ausgehaltenes Komponentensignal; und

Fig. 4b    eine Gegenüberstellung eines Frequenzspektrums eines tatsächlichen und eines modellierten Signals für ein percussives Komponentensignal.

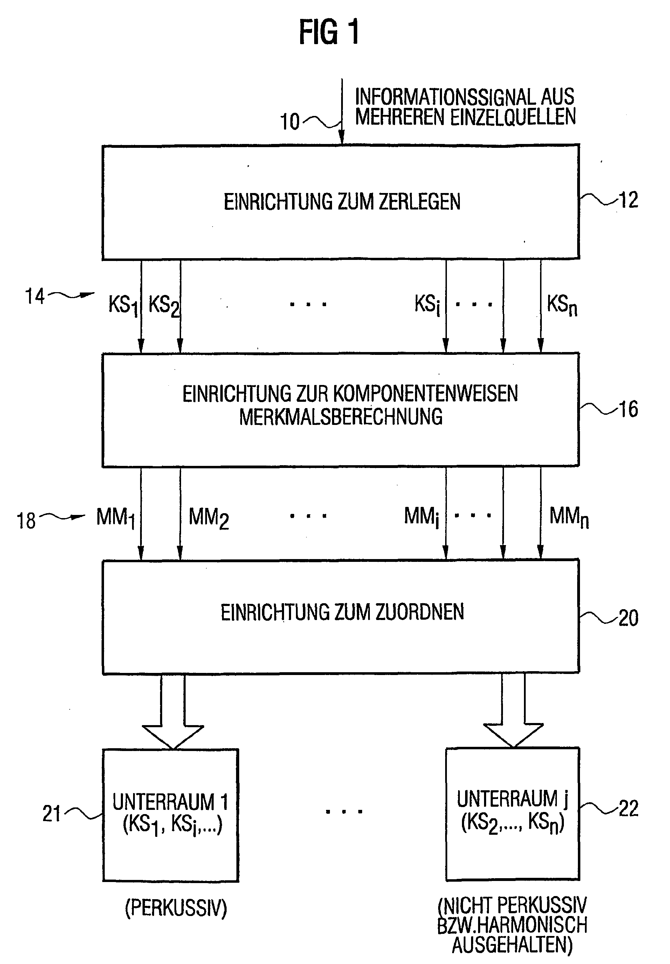

Fig. 1 zeigt ein prinzipielles Blockschaltbild einer erfindungsgemäßen Vorrichtung zum Analysieren eines Informationssignals, das aus einer Überlagerung von Teilsignalen besteht, wobei ein Teilsignal von einer Einzelquelle stammt.

Das Informationssignal, das aus den mehreren Teilsignalen besteht, wird über einen Eingang 10 einer Einrichtung 12 zum Zerlegen des Informationssignals in mehrere Komponentensignale 14 zugeführt. Die Einrichtung 12 zum Zerlegen liefert ausgangsseitig, wie es aus Fig. 1 gezeigt ist, die Komponentensignale KS1, KS2, ..., KSi, ... KSn. Die Komponentensignale 14 werden ferner einer Einrichtung 16 zum komponentenweisen Merkmalsberechnen zugeführt. Im einzelnen ist die Einrichtung 16 ausgebildet, um für jedes Komponentensignal ein Merkmal oder mehrere Merkmale zu berechnen. Das bzw. die Merkmale sind insbesondere so definiert, daß eine Aussage über einen Informationsinhalt des Komponentensignals erreichbar ist. So wird das zumindest eine Merkmal erfindungsgemäß derart gewählt, daß es mit einer Eigenschaft des Komponentensignals, nach der gesucht wird, korreliert ist. In anderen Worten ausgedrückt bedeutet dies, daß ein Merkmal verwendet wird, das für ein Komponentensignal, das eine gesuchte Eigenschaft hat, einen z. B. hohen Wert liefert und für ein Komponentensignal, das die gesuchte Eigenschaft nicht oder weniger als das zuerst betrachtete Signal hat, einen geringeren Wert liefert (oder umgekehrt).

Es wird somit eine Korrelation zwischen einem gesuchten Informationsinhalt eines Komponentensignals und einem vorzugebenden Merkmal durch eine Vorschrift zur Berechnung des Merkmals, die durch die Einrichtung 16 umgesetzt wird, erhalten.

Im allgemeinen wird die Einrichtung 16 zur komponentenweisen Merkmalsberechnung eine Rechenvorschrift ausführen, die für alle Komponentensignale dieselbe ist, und die die gewünschte Korrelation liefert. Damit ergibt sich für jedes Komponentensignal ein demselben zugewiesenes Merkmal, wobei die Merkmale in Fig. 1 in ihrer Gesamtheit mit 18 bezeichnet sind.

Die Merkmale 18 werden einer Einrichtung 20 zum Zuordnen der Komponentensignale zu mindestens zwei Unterräumen (subspaces) 21 und 22 zugeführt, wobei ein Unterraum Informationen über ein Informationssignal einer Einzelquelle oder Informationen über eine Überlagerung von Informationssignalen in einer Gruppe von Einzelquellen aufweist.

Im einzelnen untersucht die Einrichtung 20 zum Zuordnen z. B. das Merkmal MM1, das dem Komponentensignal KS1 zugewiesen ist, um dann beispielsweise zu bestimmen, daß das Komponentensignal KS1 zum ersten Unterraum 21 gehört. Diese Vorgehensweise wird die Einrichtung 20 für die anderen Komponentensignale KS2, ... KSi, ..., KSn durchführen, um dann eine wie in Fig. 1 gezeigte beispielsweise Zuordnung diverser Komponentensignale zum ersten Unterraum 21 und anderer Komponentensignale zum zweiten Unterraum 22 zu erreichen. Die in einem Unterraum zugeordneten Komponentensignale umfassen somit Informationen über ein Teilsignal einer Einzelquelle oder umfassen je nach gewähltem Merkmal auch Informationen über eine Überlagerung von Teilsignalen einer Gruppe von Einzelquellen. Wurde das Merkmal, das der Einrichtung 16 zugrunde liegt, beispielsweise so gewählt, daß es eine Korrelation mit der Percussivität eines Komponentensignals hat, so werden sich im ersten Unterraum 21 nach dem Zuordnen percussive Komponentensignale befinden, während sich im zweiten Unterraum 22 nach der Zuordnung durch die Einrichtung 20 nicht-percussive Komponentensignale befinden, also Komponentensignale, die auf harmonisch-ausgehaltene oder "harmonic sustained" Quellen bzw. Instrumente zurückgehen.

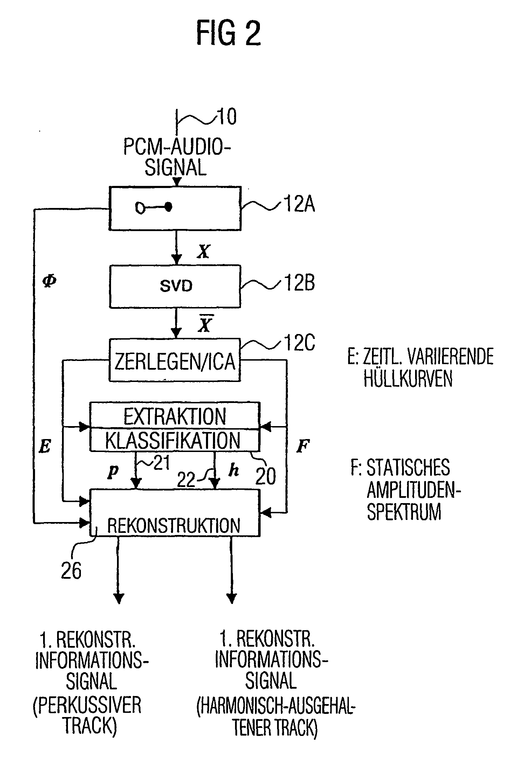

Bevor Bezug nehmend auf Fig. 2 auf ein bevorzugtes Ausführungsbeispiel der vorliegenden Erfindung eingegangen wird, sei die Erfindung noch einmal zusammengefaßt, dahingehend, daß zunächst einzelne Komponenten berechnet werden, und daß dann die berechneten Komponenten auf der Basis von einem oder mehrerer Features in Unterräume eingruppiert werden. Nach einer vollzogenen ISA liegen somit die geschätzten unabhängigen Komponenten vor. Die Komponenten werden vorzugsweise durch ein statisches Amplitudenspektrum und eine zeitveränderliche Amplitudenhüllkurve beschrieben. Durch Multiplikation von Amplitudenspektrum und Amplitudenhüllkurve wird ein Amplitudenspektrogramm rekonstruiert. Die zur vorzugsweise durchgeführten Rekonstruktion der Zeitsignale erforderlichen Phaseninformationen werden bei einem Ausführungsbeispiel so übernommen, wie sie bei der Transformation in den Frequenzbereich ermittelt wurden. Insbesondere werden, wie es ausgeführt worden ist, die Komponenten anhand bestimmter Kriterien zu Subspaces gruppiert, wobei hierzu entweder eines oder mehrere Kriterien eingesetzt werden können. Insbesondere ist ein Kriterium das Merkmal, das für ein Komponentensignal ermittelt worden ist.

Nachfolgend wird Bezug nehmend auf Fig. 2 auf ein bevorzugtes Ausführungsbeispiel der vorliegenden Erfindung eingegangen. Fig. 2 zeigt ein Ablaufdiagramm bzw. ein schematisches Blockschaltbild einer Vorrichtung zum Analysieren eines Informationssignals, wobei das Informationssignal über den Eingang 10 eingespeist wird und beispielsweise ein PCM-Audio-Signal ist (PCM = Pulse Code Modulation).

Die in Fig. 1 dargestellte Einrichtung 12 zum Zerlegen umfaßt bei dem in Fig. 2 gezeigten Ausführungsbeispiel eine Zeitbereich-Frequenzbereich-Umsetzungseinrichtung 12a. Die Zeitbereich-Frequenzbereich-Umsetzungseinrichtung ist vorzugsweise implementiert, um eine Kurzzeit-Fourier-Transformation (STFT) durchzuführen, wobei vorzugsweise ein Hamming-Fenster eingesetzt wird. Durch Fensterung wird aus einer Folge von zeitdiskreten Abtastwerten ein Block von zeitdiskreten Abtastwerten erzeugt, der dann in den Frequenzbereich umgesetzt wird. Kurzzeit-Fourier-Transformation bedeutet in diesem Zusammenhang, daß eine Fourier-Transformation eingesetzt wird, die eine Länge von 512 bis 4096 zeitlichen Abtastwerten hat, wobei im Hinblick auf einen guten Kompromiß zwischen zeitlicher und frequenzmäßiger Auflösung eine Länge von bis zu 4096 Abtastwerten bevorzugt wird. Dies führt zu 2048 Spektralkomponenten. Ein Strom von zeitdiskreten Audio-Abtastwerten am Eingang 10 wird somit in eine Folge von Kurzzeitspektren überführt, wobei ein Kurzzeitspektrum n Frequenzwerte liefert, und wobei die Folge von Abtastwerten in eine Folge von m Kurzzeitspektren bzw. Frames umgesetzt wird. Ist das Signal ein reelles Eingangssignal, so ergeben sich durch die 1024-Punkte-Fourier-Transformation 512 komplexe Spektralwerte bzw. 512 Beträge für Spektralkomponenten und 512 zugeordnete Phasen für Spektralkomponenten. Die Einrichtung 12a ist insbesondere ausgebildet, um das Betragsspektrum X zu einer nachfolgenden Einrichtung 12b weiterzuleiten, die nachfolgend noch beschrieben wird, während die Phaseninformationen $\phi$ abgespalten werden, um, wie es in Fig. 2 gezeigt wird, lediglich einer abschließenden Rekonstruktionseinrichtung 26 zugeführt zu werden. Neben der Zuführung aller 512 Spektralkomponenten in die Einrichtung 12b ist die Zuführung einer Teilmenge aller Spektralkomponenten möglich, wobei bevorzugt die den niedrigen Frequenzen entsprechenden Spektralkomponenten zugeführt werden und die den hohen Frequenzen entsprechenden Spektralkomponenten weggelassen werden.

An dieser Stelle sei darauf hingewiesen, daß die Einspeisung des Betragsspektrums X in die SVD-Einrichtung 12b lediglich beispielhaft ist und durchgeführt wird, um den Rechenaufwand zu reduzieren. Die Zerlegung des Audiosignals in Komponentensignale könnte genauso gut auch mit einer Folge von komplexen Spektren durchgeführt werden, wobei dann die Phaseninformationen-Abspaltung nicht durchgeführt werden muß.

Die Einrichtung 12b ist ausgebildet, um eine Singularwertzerlegung (SVD; SVD = Singular Value Decomposition) durchzuführen, wie sie in der Technik bekannt ist. Hierzu wird das transponierte Spektrogramm als Matrix $\mathbf{X}^T$ betrachtet. An dieser Stelle sei angemerkt, daß die Matrix $\mathbf{X}$ die Dimension n x m hat, derart, daß in einer Spalte der Matrix ein Kurzzeitspektrum der Audiodaten am Eingang steht, und daß in der nächsten Spalte der Matrix ein nächstes Kurzzeitspektrum des Audiosignals am Eingang 10 steht usw. Die Matrix X enthält somit n x m Werte, wobei eine Zeile der Matrix einen bestimmten Frequenzwert zwischen einer unteren Frequenzgrenze (multipliziert mit bevorzugt einem Frequenz-Delta, das von der Abtastfrequenz und der Fenstergröße abhängt) und einer oberen Frequenzgrenze, die maximal der Nyquist-Frequenz entspricht, darstellt, während eine Spalte einen bestimmten Zeitpunkt bzw. einen bestimmten Block aus der Folge von zeitdiskreten Abtastwerten am Eingang 10 darstellt.

Bevorzugt wird das transponierte Amplitudenspektrogramm $\mathbf{X}^T$ der Einrichtung 12b zugeführt. Es ist jedoch alternativ dazu möglich, das Amplitudenspektrogramm $\mathbf{X}$ der Einrichtung 12b zuzuführen. Bei einer Zuführung des transponierten Amplitudenspektrogramms $\mathbf{X}^T$ führt die nachfolgend beschriebene ICA zur Ermittlung von Komponentensignalen, deren Amplitudenhüllkurven maximal unabhängig sind. Eine weitere, nachgeschaltete ICA der bei der ersten ICA ermittelten Frequenzgewichtungen führt zur Ermittlung von Komponentensignalen, deren Frequenzgewichtungen maximal unabhängig sind.

Die Singularwertzerlegung der Matrix $\mathbf{X}^T$ wird durch folgende Gleichung dargestellt:

$$\mathbf{X}^T = \mathbf{U} \cdot \mathbf{D} \cdot \mathbf{V}^T \qquad (2)$$

Die Berechnung der SVD ist äquivalent zu einer Eigenwertzerlegung der Kovarianzmatrix von $\mathbf{X}^T$, wie es in der Technik bekannt ist. Übliche SVD-Algorithmen liefern eine Diagonalmatrix D von Singularwerten in absteigender Reihenfolge und zwei orthogonale Matrizen $\mathbf{U}$ und $\mathbf{V}^T$. Die Matrix $\mathbf{U} = (u_1, \dots u_m)$, die auch als die Zeilenbasis bezeichnet wird, hält die linken Singularvektoren, welche gleich den Eigenvektoren von $\mathbf{X} \cdot \mathbf{X}^T$ sind. Die Matrix $\mathbf{V} = (v_1, \dots, v_n)$. die auch als Spaltenbasis bezeichnet wird, hält die rechten Singularvektoren, die gleich den Eigenvektoren von $\mathbf{X}^T \cdot \mathbf{X}$ sind. Die Singularvektoren sind linear unabhängig und liefern daher die Orthonormalbasis für eine Rotationstransformation in Richtung der Hauptkomponenten.

Bevor die Funktionalität der SVD-Einrichtung 12b weiter dargestellt wird, wird auf die ICA-Technik bzw. BSS-Technik detaillierter eingegangen. Die Schätzung von zugrundeliegenden Teilsignalen aus Betrachtungen ihrer linearen Mischungen unter Verwendung eines Minimums an a priori-Informationen wird als BSS (BSS = Blind Source Seperation) bezeichnet. Diese Technik ist detailliert in der eingangs zitierten Literaturstelle Nr. 1 von J. Karhunen dargestellt. Die BSS-Technik hat sich in verschiedenen Gebieten einschließlich der Biomedizin, der Kommunikation und der Analyse von Audioszenen durchgesetzt. Einer der unterschiedlichen Lösungsansätze für die BSS ist die ICA-Technik, wobei ICA für Independent Component Analysis steht. Die ICA-Technik wurde in den frühen 80er Jahren eingeführt und stellt sich folgendermaßen dar. Die ICA nimmt an, daß die einzelnen Quellensignale, also die Teilsignale der Einzelquellen gegenseitig statistisch unabhängig sind. Diese Eigenschaft wird in der algorithmischen Identifikation der Einzelquellen ausgenutzt. Das ICA-Modell drückt das Beobachtungssignal **x** als das Produkt einer Mischmatrix **A** und eines Vektors von statistisch unabhängigen Signalen **s** aus, und zwar gemäß folgender Gleichung:

$$\mathbf{x} = \mathbf{A} \cdot \mathbf{s} \qquad (1)$$

Hier ist **A** eine k x l (pseudo) invertierbare Matrix mit orthogonalen Spalten. **s** ist ein Zufallsvektor mit l Quellensignalen. **x** ist ein k-dimensionaler Vektor von Beobachtungen mit k größer oder gleich l. Weitere Annahmen bestehen darin, daß jedes Quellensignal s durch einen stationären stochastischen Prozeß mit einem Mittelwert von 0 charakterisiert ist, und daß nur eines derselben eine Gauss-Verteilung hat. In der Literatur wird oft ein Rauschterm in dem Modell hinzugefügt, und zwar auf der Eingangsseite. Dieser wird im nachstehenden jedoch aus Einfachheitsgründen weggelassen. Die Voraussetzung, daß es zumindest so viele beobachtbare Mischsignale wie Quellensignale geben muß, begrenzt die Anwendung der ICA auf reale Probleme, wie beispielsweise bei der vorliegenden Analyse eines Informationssignals, das aus einer Überlagerung von Teilsignalen besteht, wobei ein Teilsignal von einer Einzelquelle stammt. Insbesondere existieren oft weniger Sensoren als Quellen. Eine weitere Begrenzung besteht in der Annahme, daß die Komponenten gegenseitig statistisch unabhängig sind.

Um diese Begrenzungen zu überwinden, existieren verschiedene Erweiterungen für die ursprüngliche ICA-Technik, die in den vorstehend zitierten Veröffentlichungen Nr. 3 von Cardoso und Nr. 4 von Hyvärinen dargestellt sind. Solche Techniken basieren, wie es vorstehend ausgeführt worden ist, auf der Ähnlichkeitsbestimmung unterschiedlicher Komponentensignale und auf der Gruppierung derselben gemäß einer zu minimierenden Kostenfunktion.

Erfindungsgemäß werden die Komponenten dagegen in unterschiedliche Subspaces bzw. Unterräume aufgeteilt, deren Komponenten nicht unabhängig sind. Um die k ≥ l-Annahme zu erfüllen, wird das Signal durch die Einrichtung 12a in eine Zeit-Frequenz-Darstellung, also ein Spektrogramm, transformiert, das als eine Multikanal-Darstellung des Signals erfindungsgemäß aufgefaßt wird.

Nachfolgend wird die Funktionalität der SVD-Einrichtung 12b weiter dargestellt. Insbesondere wird nunmehr in die Diagonalmatrix D eingegriffen, die, wie es vorstehend ausgeführt worden ist, in größenmäßig absteigender Reihenfolge die Singularwerte umfaßt. Prinzipiell würde jeder Singularwert zu einem eigenen Komponentensignal führen. Eine Betrachtung der Diagonalmatrix **D** hat jedoch ergeben, daß viele Singularwerte zu höheren Spalten der Matrix **D** hin relativ kleine Werte haben. Insbesondere sei darauf hingewiesen, daß die Singularwerte die Standardabweichungen der Hauptkomponenten von **X** darstellen. Diese Standardabweichungen sind proportional zu der Informationsmenge, die in einer entsprechenden Prinzipal-Komponente bzw. Hauptkomponente enthalten ist. Kleine Singularwerte deuten daher auf ein Signal hin, das eine geringe Standardabweichung hat, und das also eine relativ geringe Information in sich trägt. Ein Gleichwert hätte eine Standardabweichung von 0 und würde lediglich Informationen über den Gleichanteil selbst tragen, jedoch keine dynamischen Informationen aus einem Signal. Daher werden erfindungsgemäß lediglich Singularwerte zur Berechnung der Komponentensignale weiter verwendet, die einen Betrag haben, der größer als eine einstellbare Schwelle ist. Es hat sich herausgestellt, daß die Schwelle derart eingestellt werden kann, daß etwa zwischen 10 und 30 Singularwerte für eine Weiterverarbeitung ausgewählt werden. Alternativ kann auch eine feste Anzahl von Singularwerten für eine Weiterverarbeitung ausgewählt werden.

Es wird durch die Einrichtung 12b eine lineare Transformationsmatrix **T** gemäß der folgenden Gleichung berechnet, wobei **D** eine Untermatrix ist, die aus den oberen d Zeilen von **D** besteht:

$$\mathbf{T} = \overline{\mathbf{D}} \cdot \mathbf{V}^{\mathrm{T}} \qquad (3)$$

Die Transformationsmatrix **T** wird mit dem Spektrogramm **X** multipliziert, wodurch sich eine Darstellung **X** mit reduziertem Rang und maximal informativer Ausrichtung ergibt. Diese Darstellung **X** ist folgendermaßen definiert:

$$\overline{\mathbf{X}} = \mathbf{T} \cdot \mathbf{X} \qquad (4)$$

Die SVD-Einrichtung liefert somit ein maximal informatives Spektrogramm **X**, wie es vorstehend definiert ist. Die Anzahl d der erhaltenen Dimensionen, also Singularwerten ist ein aussagefähiger Parameter für den gesamten Prozeß. Wie es ausgeführt worden ist, haben Beobachtungen ergeben, daß es genügt, zwischen 10 und 30 Dimensionen weiter zu verarbeiten. Weniger Dimensionen führen zu einer nicht-vollständigen Zerlegung, während zu viele Dimensionen keine vernünftige Verbesserung ergeben, sondern lediglich den Rechenaufwand erhöhen und das Clustering-Verfahren komplizierter machen.

Wie es ausgeführt worden ist, ergeben sich am Ende so viel Komponentensignale wie Singularwerte ausgewählt worden sind. Werden zu viele Singularwerte ausgewählt, so ergeben sich zu viele Komponentensignale, derart, daß ein Teilsignal aus einer Einzelquelle am Ende in mehreren Komponentensignalen resultiert. Werden dagegen zu wenig Singularwerte genommen, so stellt ein Komponentensignal eine Überlagerung von mehreren Teilsignalen von mehreren Einzelquellen dar. Daher wird erfindungsgemäß angestrebt, die Anzahl der Singularwerte in der SVD-Einrichtung 12b wie oben dargestellt zu begrenzen, und zwar so, daß etwas mehr Singularwerte genommen werden wie unterscheidbare Einzelquellen erwartet werden, um eine Reserve dahingehend zu haben, daß auf jeden Fall keine nicht-vollständige Zerlegung auftritt. Eine etwas zu hohe Anzahl von Singularwerten, beispielsweise im Bereich von 10% der erwarteten Einzelquellen ist noch nicht so problematisch, da erfindungsgemäß ohnehin eine Zuordnung durchgeführt wird, also verschiedene Komponentensignale wieder überlagert werden, indem sie dem einen oder dem anderen Unterraum zugeordnet werden.

Nachfolgend wird die Funktionalität der ICA-Einrichtung 12c in Fig. 2 dargestellt, die gewissermaßen die letzte Stufe der Einrichtung 12 zum Zerlegen von Fig. 1 darstellt. Wie es früher ausgeführt worden ist, ist das Quellentrennmodell eine Transformation, wobei die Beobachtungen **x** durch eine Multiplikation der Quellensignale **s** mit einer unbekannten Mischmatrix **A** erhalten werden. Das Spektrogramm $X$ von reduziertem Rang, das durch die SVD-Einrichtung 12b erhalten wird, kann als Beobachtungsmatrix interpretiert werden, wobei jede Spalte als Realisierungen einer einzigen Beobachtung betrachtet werden. Erfindungsgemäß wird es bevorzugt, den Jade ICA-Algorithmus für die Berechnung von A einzusetzen. Dieser Algorithmus ist detailliert in der Fachveröffentlichung Nr. 6 von J.-F. Cardoso und A. Souloumiac dargestellt, die vorstehend unter der Nr. 6 zitiert worden ist. Dieser Algorithmus wird besonders deswegen bevorzugt, weil er Korrelationen höherer Ordnung durch eine verbundene approximierte Diagonalisierung von Eigenmatrizen von Kreuzkumulantentensoren minimiert. Die abgeschätzte Mischmatrix A wird berechnet, um die unabhängigen Komponenten bzw. Komponentensignale zu berechnen. Ihre Pseudo-Inverse **A**$^{-1}$ stellt die "Entmisch-Matrix" bzw. "Unmixing-Matrix" dar, durch die die unabhängigen Quellen, d. h. Komponentensignale extrahiert werden können. Wenn also die Mischmatrix **A** berechnet worden ist, muß die Mischmatrix A invertiert werden, um **A**$^{-1}$ zu erhalten. Dann kann die nachstehende Gleichung berechnet werden:

$$\mathbf{E} = \mathbf{A}^{-1} \cdot \overline{\mathbf{X}} \qquad\qquad (5)$$

Unabhängige zeitliche Amplitudenhüllkurven E ergeben sich somit.

Nachfolgend werden noch die unabhängigen Frequenzgewichtungen **F** berechnet, indem die nachfolgende Gleichung berechnet wird und nachfolgend eine Pseudo-Inversion durchgeführt wird.

$$\mathbf{F}^{-1} = \mathbf{A}^{-1} \cdot \mathbf{T} \qquad\qquad (6)$$

Die vorstehende Gleichung ergibt die inverse Matrix **F**$^{-1}$, die, wie es ausgeführt worden ist, noch invertiert werden muß, um die Frequenzgewichtungen **F** für die Komponentensignale zu erhalten. Die unabhängigen Spektrogramme bzw. Komponentensignale werden dann erhalten, indem eine Spalte von **F** mit der entsprechenden Zeile von **E** multipliziert wird, was gleichungsmäßig folgendermaßen dargestellt wird:

$$\mathbf{S}_c = \mathbf{F}_{u,c} \cdot \mathbf{E}_{c,v} \qquad\qquad (7)$$

Der Index u läuft von 1 bis n. Der Index v läuft von 1 bis m. Der Index c läuft von 1 bis d. Die Zeitsignale der einzelnen durch Gleichung 7 dargestellten Komponentensignale werden durch eine inverse Kurzzeit-Fourier-Transformation des Spektrogramms **S**$_c$ erhalten. In den vorstehenden Gleichungen wurden die Komponentensignale in Matrixschreibweise aus Übersichtlichkeitsgründen dargelegt.

Ein einzelnes Komponentensignal wird bei der vorstehend bevorzugten Frequenzbereichsverarbeitung durch die Einrichtung 12c dahingehend berechnet, daß ein Komponentensignal durch eine statisches Amplitudenspektrum dargestellt ist, also eine Spalte der Matrix **F**, und daß das Komponentensignal ferner durch eine zeitveränderliche Amplitudenhüllkurve dargestellt ist, nämlich eine zu der Spalte von **F** zugehörige Zeile von **E**. Ein Komponentensignal im Zeitbereich würde sich somit dadurch ergeben, daß das Spektrum F eines Komponentensignals mit einem zugehörigen Wert der Amplitudenhüllkurve E multipliziert wird. Dann wird dasselbe Spektrum F mit dem nächsten Wert aus der Amplitudenhüllkurve E multipliziert usw. Somit ergibt sich eine Folge von mit unterschiedlichen Werten multiplizierten Spektren, die dann nach einer inversen Kurzzeit-Fourier-Transformation eine Folge von zeitlichen Abtastwerten darstellen, welche ein zeitliches Komponentensignal bilden.

Abhängig von der Gesamtanzahl von extrahierten Komponenten könnte die Zerlegung nicht vollständig sein, und zwar in dem Fall, in dem eine nicht-ausreichende Anzahl von Komponenten verwendet worden ist. Andererseits könnte die Zerlegung auch übervollständig sein, was im entgegengesetzten Fall stattfinden würde, also bei einer zu hohen Anzahl von Singularwerten. Eine nicht-vollständige Darstellung führt zu einer fehlerhaften Rekonstruktion des Eingangssignals aus der Überlagerung des gesamten Satzes von unabhängigen Komponenten. Eine Erhöhung der Anzahl von extrahierten Komponenten führt zu einem kleineren quadratischen Fehler zwischen dem ursprünglichen Audiosignal und der Rekonstruktion mit allen Einzelkomponenten.

Der Eindruck einer nicht-vollständigen Zerlegung für einen menschlichen Zuhörer besteht in dem Verschwinden der schwächeren oder seltener auftretenden Töne. Andererseits bewirkt eine übervollständige Zerlegung, daß die statistisch herausragenden Instrumente mehr extrahierte Komponenten belegen als andere. Ein erfindungsgemäßer Kompromiß besteht darin, um einen Detailverlust zu vermeiden und die Extraktion von quasi-redundanten Komponenten so stark als möglich zu unterdrücken, das eine leicht (beispielsweise 10%-ige) übervollständige Zerlegung mit anschließender Aufteilung der Komponenten in einzelne Unterräume durchgeführt wird, und zwar basierend auf bestimmten Merkmalen für die Komponenten bzw. Komponentensignale.

Nachfolgend werden verschiedene Ausführungsbeispiele der Einrichtung 16 zum Extrahieren gegeben. Im einzelnen werden verschiedene Merkmale dargestellt. Bevorzugterweise werden verschiedene Merkmale entweder einzeln oder in Kombination zur Klassifikation verwendet. Diese Merkmale sind die Percussivität (percussiveness), die Rauschartigkeit (Noise-Likeness), die Spektraldissonanz (Spectral-Dissonance), das Spektralflachheitsmaß (Spectral-Flatness Maesure SFM) oder der Kummulant dritter Ordnung (Third Order Cumulant). Diese fünf Merkmale können entweder einzeln oder in beliebiger Kombination dazu verwendet werden, um die Klassifikation, also die Zuordnung der Komponentensignale zu den Unterräumen 21, 22, die durch den Block 20 in Fig. 1 oder Fig. 2 durchgeführt wird, zu steuern.

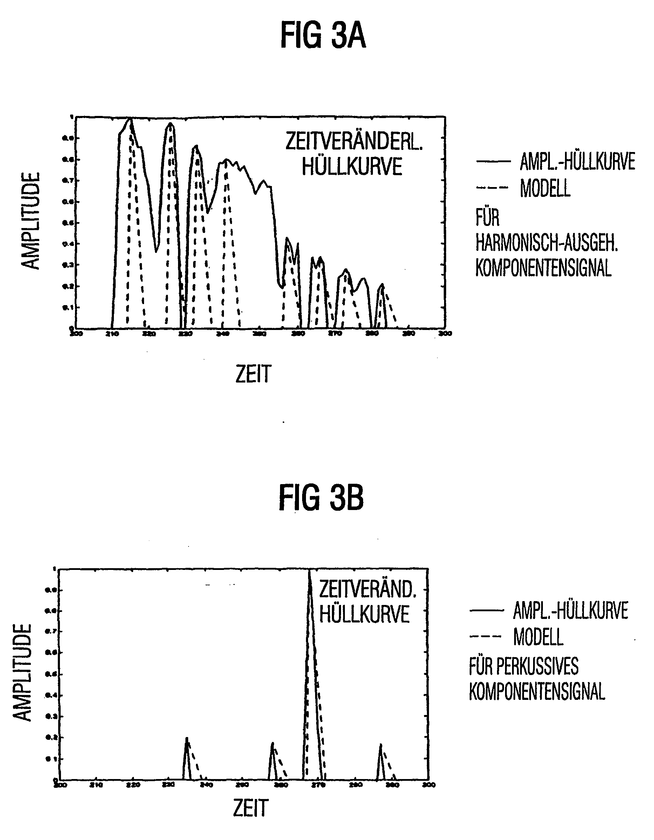

Das Percussivitäts-Merkmal wird aus den zeitvariierenden Amplitudenhüllkurven extrahiert. Es wird also für das Merkmal der Percussivität nicht das statische Spektrum F eines Komponentensignals betrachtet, sondern die zeitlich variierende Amplitudenhüllkurve E des Komponentensignals. Es wird ferner zugrunde gelegt, daß percussive Komponenten Impulse mit schnellem Anstieg, also einer schnelle Attack-Phase haben und daß die Impulse ferner einen langsameren Abfall zeigen. Dagegen haben Amplitudenhüllkurven von Komponenten, die von harmonisch ausgehaltenen Tönen stammen, signifikante Plateaus. Die percussiven Impulse werden dadurch modelliert, daß z. B. ein einfaches Modell mit einem augenblicklichen Anstieg der Amplitudenhüllkurve und einem linearen Abfall auf 0 beispielsweise innerhalb einer Zeit von 200 ms verwendet wird. Diese "Modellschablone" wird mit den lokalen Maxima der Amplitudenhüllkurve eines Komponentensignals gefaltet. In anderen Worten wird eine Amplitudenhüllkurve E eines Komponentensignals genommen und zunächst einer Verarbeitung unterzogen, um die lokalen Maxima der Amplitudenhüllkurve herauszufinden. Dann werden die lokalen Maxima und die entsprechenden die lokalen Maxima umgebenden Bereiche der Amplitudenhüllkurve mit der "Modellschablone", also mit dem Modell-Amplitudenverlauf gefaltet. Hierauf ergibt sich ein Korrelationskoeffizient des Modellvektors und des Ursprungsvektors, der einen Grad an Percussivität darstellt. Hierzu wird beispielhaft auf Fig. 3a und Fig. 3b verwiesen. Fig. 3a zeigt eine zeitveränderliche Amplitudenhüllkurve für ein harmonisch-ausgehaltenes Komponentensignal in durchgezogener Darstellung. Die gestrichelte Darstellung zeigt dagegen eine Modellhüllkurve, bei der der Mustersignalverlauf an die lokalen Maxima der Amplitudenhüllkurve in Fig. 3a in durchgezogener Form angelegt sind. Es zeigt sich eine relativ geringe Korrelation, es wird sich also ein relativ geringer Korrelationskoeffizient ergeben.

Ganz anders ist der Fall in Fig. 3b, wo eine Amplitudenhüllkurve in durchgezogener Darstellung für ein percussives Signal dargestellt ist. Ferner ist eine Modellkurve in gestrichelter Form eingezeichnet, und zwar jeweils an den lokalen Maxima der Amplitudenhüllkurve. Es zeigt sich, daß eine enge Korrelation zwischen der durchgezogenen Linie und der gestrichelten Linie besteht, so daß sich ein Korrelationskoeffizient ergibt, der einen wesentlich größeren Wert hat als der für die Verhältnisse in Fig. 3a berechnete Korrelationskoeffizient. Der Algorithmus zur Berechnung der Percussivität eines Komponentensignals liefert somit für percussivere Komponentensignale höhere Werte, d. h. ein größeres Merkmal, als für nicht-percussive Komponentensignale, für die sich ein kleineres Merkmal, also eine kleinere Percussivität ergibt.

Unter Verwendung der Percussivität als Merkmal in der Einrichtung 16 zur komponentenweisen Merkmalsberechnung und unter Verwendung beispielsweise eines anschließenden Schwellenvergleichs in der Einrichtung 20 zum Zuordnen, dahingehend, daß Komponentensignale mit einer Percussivität größer als ein bestimmter Schwellwert in den percussiven Unterraum 21 gelegt werden, während andere Komponentensignale mit einer Percussivität kleiner als dem Schwellenwert in den nicht-percussiven Unterraum 22 gelegt werden. Durch dieses Prozedere können somit percussive Komponentensignale insgesamt erkannt werden, also durch die erfindungsgemäße Analyse ermittelt werden und z. B. überlagert und rekonstruiert werden, um auf der Basis dieser Komponentensignale eine Rhythmusextraktion durchzuführen, die nicht durch harmonisch-ausgehaltene Komponentensignale gestört wird. Andererseits könnte auf der Basis der im Unterraum 22 von Fig. 2 befindlichen Komponentensignale eine Melodieextraktion bzw. eine Notenextraktion oder auch eine Instrumentenerkennung durchgeführt werden, die nicht durch die percussiven Komponentensignale beeinträchtigt wird und somit zu einem besseren und schnelleren und insbesondere auch weniger rechenzeitaufwendigen Ergebnis führen kann, als wenn das gesamte Signal einschließlich percussiver und harmonisch ausgehaltener Komponentensignale insgesamt einer Rhythmusextraktion oder einer Noten/Melodieerkennung unterzogen wird.

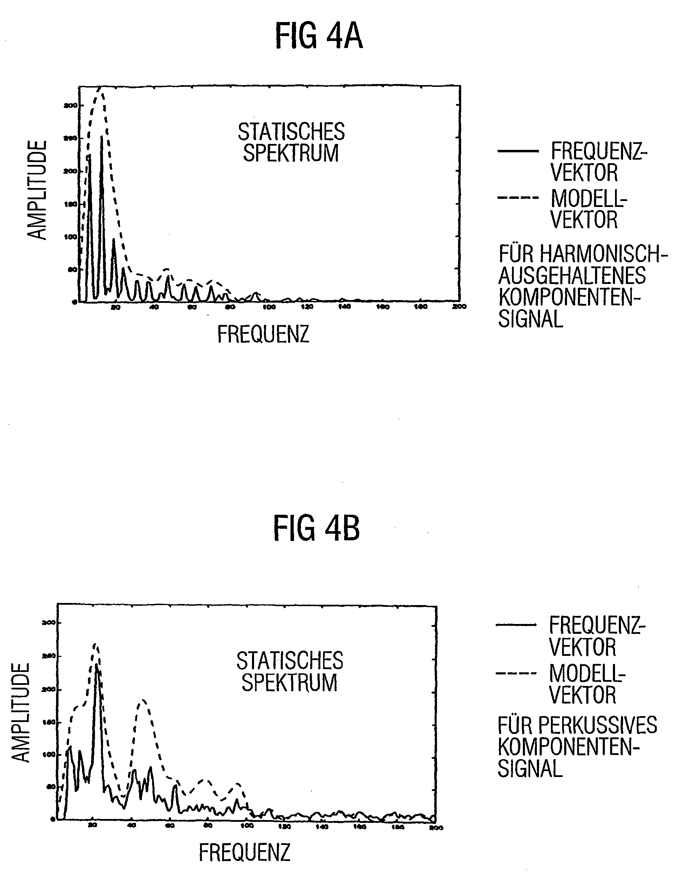

Nachfolgend wird Bezug nehmend auf die Fig. 4a und 4b ein weiteres alternatives Merkmal dargelegt, das entweder allein oder zusammen mit dem Merkmal der Percussivität durch die Einrichtung 20 zum Zuordnen verwendet werden kann. Das Merkmal der Rauschartigkeit wird nicht, wie das Merkmal der Percussivität auf der Basis der zeitveränderlichen Hüllkurve E berechnet, sondern auf der Basis des statischen Spektrums **F**. Die Rauschhaftigkeit wird aus dem Frequenzvektor der Komponenten abgeleitet. Sie wird extrahiert, um den Grad an Rauschartigkeit zu quantifizieren, welcher die Nähe eines Komponentensignals zum percussiven Unterraum angeben soll. Gemäß den Erkenntnissen von W. Aures, Berechnungsverfahren für den Wohlklang beliebiger Schallerzeugnisse, ein Beitrag zur gehörbezogenen Schallanalyse, Dissertation (in german), Technical University München, 1984 und R. Parncutt, Harmony: A Psychoacoustical Approach, Springer, New York, 1989 haben tonale Spektren als Merkmale herausragende Töne oder Partials, die schmalbandig sind, im Gegensatz zu atonalen oder rauschhaften Spektren, die, wenn überhaupt, höchstens breitbandige Partials, also herausragende Komponenten aus dem Spektrum, haben. Zur Berechnung des Merkmals der Rauschartigkeit wird zunächst wieder eine Untersuchung des Spektrums dahingehend durchgeführt, daß die lokalen Maxima herausgefunden werden. Die lokalen Maxima werden dann mit einem Gauss-Impuls mit einem Mittelwert von 0 und einer Varianz σ gefaltet, welcher folgendermaßen gegeben ist:

$$g(x) = \exp\left(-\frac{x^2}{2\sigma^2}\right) \qquad (8)$$

Die Rauschartigkeit wird dann als der Korrelationskoeffizient eines ursprünglichen und eines resultierenden Modellvektors bestimmt. Fig. 4a zeigt einen Ursprungsvektor in durchgestrichener Form für ein harmonisch-ausgehaltenes Komponentensignal und einen Modellvektor in gestrichelter Darstellung, der sich dadurch ergibt, daß jedes lokale Maximum mit einem Gauss'schen Impuls der oben stehenden Form gefaltet wird. Die gestrichelte Linie in Fig. 4a ergibt sich somit durch eine Plazierung eines Gauss'schen Impulses an jedes Maximum und die entsprechende Aufsummation der einzelnen Gauss'schen Impulse.

Aus Fig. 4a zeigt sich, daß eine relativ geringe Korrelation zwischen dem in durchgezogenere Form dargestellten Frequenzvektor und dem in gestrichelter Form dargestellten Modellvektor besteht. Ganz anders sieht es dagegen in Fig. 4b aus. Wird das Prozedere von Fig. 4a auf Fig. 4b angewendet, das in durchgezogener Form einen percussiven Frequenzvektor zeigt, so würde wieder an jedes lokale Maximum des Signalverlaufs, der in Fig. 4b der durchgezogene Signalverlauf ist und das Ursprungssignal darstellt, ein Gauss-Impuls der oben bezeichneten Form angeordnet, wonach die resultierenden Gauss-Impulse aufsummiert werden. Aus Fig. 4b ist klar ersichtlich, daß eine relativ hohe Korrelation zwischen dem gestrichelt dargestellten Modellvektor und dem in durchgezogener Form dargestellten ursprünglichen Frequenzvektor besteht, so daß der Korrelationskoeffizient im Fall von Fig. 4b hoch sein wird, was auf ein percussives Komponentensignal hinweist, während der Korrelationskoeffizient in Fig. 4a klein sein wird, was wiederum auf ein harmonisch-ausgehaltenes Komponentensignal hindeutet. Auch das Merkmal der Rauschartigkeit liefert somit eine ausreichende Charakterisierung eines Komponentensignals, damit die Einrichtung 20 zum Zuordnen eine mit hoher Wahrscheinlichkeit richtige Zuordnung durchführen kann.

Das Merkmal der Spektraldissonanz ist dahingehend zur Percussivitätsbestimmung interessant, da angenommen wird, daß percussive Töne mehr nicht-harmonische Partials, also Spektralanteile enthalten als harmonisch-ausgehaltene Töne. Diese Annahme motiviert die Extraktion eines Dissonanzmaßes gemäß Sethares, wie es in "Local Consonance and the Relationship between Timbre and Scale", J. Acoust. Soc. Am., 94(3), Bd. 1, 1993 beschrieben ist. Die Spektraldissonanz wird aus dem statischen Frequenzspektrum F der unabhängigen Komponenten abgeleitet, indem die paarweise Dissonanz aller Spektralkomponenten aufaddiert wird. Die Dissonanz d von zwei Sinussignalen mit Frequenzen $f_1$, $f_2$ und den Amplituden $a_1$ bzw. $a_2$ ergibt sich folgendermaßen:

$$d(f_1, f_2, a_1, a_2) = a_1 a_2 \left( e^{-as(f_2 - f_1)} - e^{bs(f_2 - f_1)} \right) \tag{9}$$

Gemäß der vorstehenden Literaturstelle werden die Parameter a, b und s folgendermaßen eingestellt:

$$a = 3{,}5, \quad b = 5{,}75 \quad \text{und} \quad s = \frac{0{,}24}{(0{,}021 f_1 + 19)}$$

Zur Bestimmung der Spektraldissonanz werden alle Frequenzlinien in dem Spektrum ausgewertet, wobei die Maxima in einem Spektrum den größten Beitrag zur Dissonanz liefern, während kleine Spektrallinien einen kleinen Beitrag liefern, beispielsweise in dem Spektrum von Fig. 4a oder Fig. 4b. Es wird also in einer erschöpfenden Suche die Dissonanz zwischen jedem Paar von Speltralkomponenten durchgeführt, so daß sich für das Spektrum von Fig. 4a ein bestimmter Wert ergibt, der relativ klein sein wird, da das Spektrum harmonisch, also nicht-dissonant ist, während sich für Fig. 4b ein relativ großer Wert ergeben wird, der darauf hindeutet, daß das Spektrum in Fig. 4b spektral dissonant ist, also nicht von einem harmonisch-ausgehaltenen Instrument, sondern von einem percussiven Instrument stammt.

Das Merkmal der spektralen Flachheit beschreibt die Flachheitseigenschaften eines Spektrums eines Audiosignals, wie es beispielsweise in Fig. 4a oder 4b dargestellt ist. So wird angenommen, daß percussive Komponenten flachere Spektren haben als harmonisch-ausgehaltene Komponenten. Gemäß International Standards Organization (ISO), Information Technology - Multimedia Content Description Interface - Part 4: Audio, ISO-IEC 15938-4 (E), 2001 wird das Merkmal SFM als Verhältnis des geometrischen Mittelwerts zum arithmetischen Mittelwert der Leistungsspektrumskoeffizienten folgendermaßen berechnet:

$$SFM(x) = \frac{\sqrt[N]{\prod_{n=1}^{N} x_n}}{\frac{1}{N} \sum_{n=1}^{N} x_n} \tag{10}$$

Hierbei bezeichnet N die Anzahl von Frequenzwerten oder Frequenzbins des Leistungsspektrums **x**. Der Vektor **x** ist gleich dem Ein-elementweisen quadrierten Spaltenvektor von **F**, also dem statischen Spektrum für ein Komponentensignal. Auf der Basis des SFM-Merkmals kann wiederum z. B. unter Verwendung einer Schwellwertentscheidung eine Zuordnung der Komponentensignale auf der Basis der berechneten SFM-Werte in einen percussiven Unterraum bzw. einen nicht-percussiven Unterraum vorgenommen werden.

Bezüglich des Merkmals des Kummulanten dritter Ordnung wird darauf hingewiesen, daß sämtliche Merkmale verwendet werden können, die aus Statistiken höherer Ordnung berechnet werden können. So ist die Verwendung von Statistiken höherer Ordnung bezüglich der unabhängigen Komponenten als Abstandsmaß zwischen den Komponenten in der eingangs dargestellten Literaturstelle von Dubnov beschrieben, die unter der eingangs genannten Literaturstelle Nr. 5 erörtert worden ist. In diesem Fall ist die Einrichtung zur komponentenweisen Merkmalsberechnung, die in Fig. 1 mit 16 bezeichnet ist, wirksam, um das statische Spektrum beispielsweise von Fig. 4a oder Fig. 4b in den Zeitbereich zu transformieren, indem eine inverse Kurzzeittransformation verwendet wird, um ein Zeitsignal **x** zu erhalten. Danach wird der Kummulant dritter Ordnung berechnet, wie es durch nachfolgende Gleichung dargestellt ist:

$$TOC(x) = E\{x^3\} - 3E\{x^2\}E\{x\} + 2[E\{x\}]^3 \tag{11}$$

Hierbei bezeichnet E {.} den Erwartungsoperator, und **x** bezeichnet das Zeitsignal. Unter Verwendung des Merkmals TOC (TOC = Third Order Cumulant) kann wieder basierend auf Schwellwertentscheidung z. B. in der Einrichtung 20 eine Zuordnung von Komponentensignalen zu Unterräumen erfolgen.

An dieser Stelle sei darauf hingewiesen, daß die vorstehend genannten Merkmale besonders gut dafür geeignet sind, percussive Komponentensignale von nicht-percussiven Komponentensignalen zu unterscheiden. Es sei jedoch darauf hingewiesen, daß andere Merkmale nötig sein dürften, um beispielsweise Geigen-artige Komponentensignale von Flötenartigen Komponentensignalen zu unterscheiden. Somit können gemäß der vorliegenden Erfindung beliebige Komponentensignale von beliebigen Komponentensignalen unterschieden werden, wenn jeweils ein Merkmal extrahiert wird, das mit den Quellencharakteristika, die für die einzelnen Unterräume vorgesehen sind, über die durch die Gruppierung in die Unterräume unterschieden werden sollen, korreliert ist.

Es wird bevorzugt, daß die Einrichtung 20 zum Klassifizieren bzw. Zuordnen ausgebildet ist, um nicht nur ein Merkmal zu verwenden, sondern eine Mehrzahl von Merkmalen zu verwenden, um eine Zuordnung der Komponentensignale zu erreichen.

Bei einem Ausführungsbeispiel wird es bevorzugt, zunächst das Merkmal zu verwenden, das die höchste Zuverlässigkeit liefert. Es sei darauf hingewiesen, daß die Zuverlässigkeit eines Merkmals aufgrund von mehreren Testläufen bestimmt werden kann. Auf der Basis des zuverlässigsten Merkmals wird somit zunächst eine Entscheidung dahingehend durchgeführt, daß die Komponentensignale, die ein Merkmal oberhalb einer Schwelle haben, die vorbestimmt werden kann, zu einer nächsten Entscheidungsstufe geführt werden, während die anderen, die bereits an dieser ersten Hürde scheitern, in einen anderen Unterraum klassifiziert werden. So können jedoch noch Komponentensignale vorhanden sein, die zwar die erste Entscheidungsschwelle genommen haben, die jedoch noch möglicherweise Fehlentscheidungen dahingehend sind, daß diese Komponentensignale beispielsweise keine percussive Eigenschaft haben sondern lediglich zufälligerweise ein Merkmal erhalten haben, das auf eine percussive Eigenschaft hinweisen würde. Diese Fehlentscheidungen werden noch ausgesiebt, indem zusätzliche Merkmale mit ihrer jeweiligen Schwelle verglichen werden. Schließlich ergeben sich nach einer Überlagerung der einzelnen Komponentensignale in den Unterräumen 21 und 22 von Fig. 1 bzw. Fig. 2 zwei Indexvektoren **p** und **h**, wobei **p** die Indizes der Komponenten enthält, die als percussiv klassifiziert worden sind, während **h** alle Komponenten umfaßt, also die, die nicht percussiv sind und von denen angenommen wird, daß sie von harmonisch ausgehaltenen Einzelquellen stammen.

Sobald die unabhängigen Komponenten entweder dem percussiven oder dem harmonisch ausgehaltenen Unterraum zugeordnet worden sind, wird es bevorzugt, durch eine Rekonstruktionseinrichtung 26 von Fig. 2 zwei voneinander unabhängige Audiodatenströme zu erzeugen. Dies wird erreicht, indem eine Matrixmultiplikation der Teile von **E**, die die zeitlich variierenden Amplitudenhüllkurven umfaßt, und **F**, die die statischen Frequenzgewichtungen enthält, ausgeführt wird, wobei die zu multiplizierenden Zeilen bzw. Spalten von **E** und **F** durch die Klassifikation der Unterräume, also durch **p** und **h** erreicht worden ist. Der Ausdruck

$$\mathbf{S}_{\mathbf{p}} = \mathbf{F}_{u,p}\mathbf{E}_{p,v}$$

ergibt ein rekonstruiertes Amplitudenspektrogramm, das dem percussiven Teil des Eingabespektrogramms **X** entspricht. Entsprechend liefert

$$\mathbf{S}_{\mathbf{h}} = \mathbf{F}_{u,h}\mathbf{E}_{h,v}$$

den harmonisch ausgehaltenen Teil.

Schließlich wird es bei einem Ausführungsbeispiel der vorliegenden Erfindung noch bevorzugt, die ursprünglich abgespaltenen Phaseninformationen φ die in Form einer Matrix vorliegen, hinzuzufügen, indem eine elementweise Multiplikation durchgeführt wird, die durch folgende Gleichung gegeben ist:

$$\mathbf{S}_{u,v} = \mathbf{S}_{u,v}\left(\cos\left(\Phi_{u,v}\right) + j\sin\left(\Phi_{u,v}\right)\right)$$

Nach der Phasenmultiplikation liegt nunmehr ein Phasenbehaftetes Spektrogramm, also eine Folge von bereits gewichteten Spektren vor, die durch eine inverse Kurzzeit-Fourier-Transformation bzw. allgemein durch eine Frequenz-Zeit-Umsetzung, die bezüglich der in dem Block 12a verwendete Zeit-Frequenz-Umsetzung invers ist, geschickt wird. Diese Frequenz-Zeit-Umsetzung findet für jedes gewichtete Kurzzeitspektrum statt, so daß sich nach der Transformation wieder ein Strom von Audioabtastwerten ergibt, nun jedoch ein Strom, der lediglich percussive Komponentensignale enthält, der also als percussiver Track bezeichnet werden kann, und ein Strom, der lediglich Signale von harmonisch-ausgehaltenen Quellen hat, wobei dieser Strom auch als harmonisch-ausgehaltener Track bezeichnet wird.

Bei einer Auswertung des erfindungsgemäßen Konzepts wurden Schlagzeug-Komponenten aus einer Datenbank von neun Beispielsignalen extrahiert. Die Dauer von jedem dieser Teststücke betrug 10 Sekunden. Die Testdateien wurden mit einer Abtastrate von 44100 Hz und einer 16-Bit-Amplitudenauflösung abgetastet. Die Teststücke betreffen unterschiedliche musikalische Werte, die von Big-Band-Stücken über Rock-Pop-Stücke zu elektronischen Musikstücken reichen. Bei dieser Untersuchung hat sich herausgestellt, daß alle beschriebenen Merkmale Zuverlässigkeiten von über 70% erreicht haben, während das Merkmal der Rauschartigkeit mit einer Zuverlässigkeit von 95% die besten Ergebnisse geliefert hat.

An dieser Stelle sei darauf hingewiesen, dass leise Teilsignale in hohen Frequenzbändern auftreten können, die wenig Energie und kaum Partialtöne besitzen und dadurch statistisch nicht signifikant genug sind und daher durch die Dimensionsreduktion entfernt werden (z.B. Hihats). Mittels einer z. B. frequenzselektiven Vorverarbeitung wird es daher bevorzugt, diese Teilsignale im Informationssignal zu verstärken, bevor die Zerlegung stattfindet.

Insbesondere wird zur Vorverarbeitung ein "Enhancer" eingesetzt. Dabei wird zuerst das Informationssignal mit einem Hochpass gefiltert. Das hochpassgefilterte Informationssignal wird anschließend harmonisch verzerrt. Das resultierende Signal wird zu dem Originalsignal addiert. Dadurch werden den Signalen "künstliche" Partialtöne zuaddiert.

Es wird ferner bevorzugt, eine Nachbearbeitung der Komponentensignale vor der Merkmalsextraktion vorzunehmen. Die Amplitudenhüllkurven können mittels einer dynamischen Amplitudenverarbeitung, die in der Technik auch als "Noisegate" bezeichnet wird nachverarbeitet werden. Ziel ist die Beseitigung von Artefakten in den Einzelquellen, die von anderen Teilsignalen stammen und nur wenig Energie enthalten. Angenommen, eine percussive Komponente enthält eine Anzahl von percussiven Anschlägen, so können zwischen den Anschlägen Artefakte von anderen Teilsignalen auftreten, die sich als Rauschteppich bemerkbar machen. Diese können z. B. mit Hilfe des Noisegates, also einer Rauschunterdrückung, unterdrückt werden.

Abhängig von den Gegebenheiten kann das erfindungsgemäße Verfahren zum Analysieren eines Informationssignals in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das erfindungsgemäße Verfahren ausgeführt wird. Allgemein besteht die Erfindung somit auch in einem Computer-Programm-Produkt mit einem auf einem maschinenlesbaren Träger gespeichertem Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

**Patentansprüche**

1. Vorrichtung zum Analysieren eines Informationssignals, wobei das Informationssignal ein Audiosignal ist, das aus einer Überlagerung von Teilsignalen besteht, wobei die Teilsignale von Einzelquellen stammen, die zusammen das Audiosignal bilden, wobei die Vorrichtung beinhaltet:

    einer Einrichtung (12) zum Zerlegen des Informationssignals in mehrere Komponentensignale (14);
    einer Einrichtung (16) zum Berechnen eines Merkmals für jedes einzelne Komponentensignal, wobei das Merkmal so definiert ist, dass es mit einer Quellencharakteristik für einen Unterraum und mit einer anderen Quellencharakteristik für einen anderen Unterraum korreliert ist, wobei jedem Unterraum eine oder mehrere Einzelquellen zugeordnet sind, und wobei sich die eine oder die mehreren Einzelquellen, die dem einen Unterraum zugeordnet sind, von der einen oder den mehreren Einzelquellen unterscheiden, die dem anderen Unterraum zugeordnet sind; und
    einer Einrichtung (20) zum Zuordnen der Komponentensignale zu mindestens zwei Unterräumen (21, 22) auf der Basis der Merkmale (18) für die Komponentensignale, so dass der eine Unterraum Komponentensignale umfasst, die der einen oder den mehreren Einzelquellen, die dem einen Unterraum zugeordnet sind, entsprechen und dass der andere Unterraum Komponentensignale umfasst, die der einen oder den mehreren Einzelquellen, die dem anderen Unterraum zugeordnet sind, entsprechen.

2. Vorrichtung nach Anspruch 1, die ferner folgendes Merkmal aufweist:

    eine Einrichtung (26) zum Rekonstruieren der einem Unterraum zugeordneten Komponentensignale, um ein rekonstruiertes Informationssignal zu erhalten, wobei das rekonstruierte Informationssignal auf einem Teilsignal einer Einzelquelle oder auf einer Überlagerung von Teilsignalen einer Gruppe von Einzelquellen beruht.

3. Vorrichtung nach Anspruch 1 oder 2, bei der die Einrichtung (12) zum Zerlegen eine Zeit-Frequenz-Umsetzungseinrichtung (12a) aufweist, um aus dem Informationssignal eine Folge von Kurzzeitspektren zu erhalten.

4. Vorrichtung nach Anspruch 3, bei der die Einrichtung (12) zum Zerlegen ferner ausgebildet ist, um als Folge von Kurzzeitspektren eine Folge von Kurzzeitbetragsspektren zu berechnen.

5. Vorrichtung nach Anspruch 3 oder 4, bei der die Einrichtung (12) zum Zerlegen ausgebildet ist, um eine Singular-Wert-Zerlegung (12b) mit der Folge von Kurzzeitspektren durchzuführen, um Singularwerte zu erhalten, die auf die Komponentensignale hinweisen.

6. Vorrichtung nach Anspruch 5, bei der die Einrichtung (12b) zum Zerlegen ferner ausgebildet ist, um eine Anzahl von Singularwerten aus allen erhaltenen Singularwerten auszuwählen, deren Betrag größer als ein Schwellenbetrag ist.

7. Vorrichtung nach Anspruch 6, bei der die Anzahl von ausgewählten Singularwerten größer als eine Anzahl von für das Informationssignal erwarteten Einzelquellen ist.

8. Vorrichtung nach einem der vorhergehenden Ansprüche, bei der die Einrichtung (12) zum Zerlegen ausgebildet ist, um ein Komponentensignal als ein statisches Amplitudenspektrum und eine zugehörige zeitveränderliche Amplitudenhüllkurve zu ermitteln.

9. Vorrichtung nach einem der vorhergehenden Ansprüche, bei der die Einrichtung (16) zum Berechnen ausgebildet ist, um für ein Komponentensignal eine Mehrzahl von unterschiedlichen Merkmalen zu berechnen.

10. Vorrichtung nach Anspruch 9, bei der die Einrichtung (20) zum Zuordnen ausgebildet ist, um eine mehrstufige Zuordnung durchzuführen, wobei ein zuverlässigeres Merkmal in einer ersten Stufe der Zuordnung verwendbar ist, und wobei ein weniger zuverlässiges Merkmal in einer zweiten nachgeordneten Stufe verwendbar ist.

11. Vorrichtung nach einem der vorhergehenden Ansprüche, bei der das Merkmal ein quantitatives Merkmal ist, wobei die Einrichtung (20) zum Zuordnen ausgebildet ist, um auf der Basis einer Quantität des Merkmals zu arbeiten.

12. Vorrichtung nach einem der vorhergehenden Ansprüche, bei der die Einrichtung (20) zum Zuordnen ausgebildet ist, um unter Verwendung einer vorbestimmten Schwelle zu arbeiten, wobei eine Zuordnung eines Komponentensignals (14) zu einem Unterraum (21, 22) darauf basiert, ob das Merkmal für das Komponentensignal größer oder kleiner als die vorbestimmte Schwelle ist.

13. Vorrichtung nach einem der vorhergehenden Ansprüche, bei der die Einrichtung (16) zum Berechnen ausgebildet ist, um ein Merkmal zu berechnen, das hinsichtlich einer Zugehörigkeit einer Einzelquelle zu einem Typ von Schallerzeugern aussagekräftig ist.

14. Vorrichtung nach Anspruch 13, bei der das Informationssignal ein Musiksignal umfaßt und die Einrichtung (16) zum Berechnen ausgebildet ist, um ein Merkmal zu verwenden, das hinsichtlich eines Typs von Musikinstrumenten aussagekräftig ist.

15. Vorrichtung nach einem der vorhergehenden Ansprüche, bei der die Einzelquellen nicht-percussive und percussive Einzelquellen umfassen, wobei die Einrichtung (16) zum Berechnen ausgebildet ist, um als Merkmal ein Merkmal zu verwenden, das mit einer Percussivität eines Komponentensignals korreliert ist, so daß zu einem ersten Unterraum als percussiv festgestellte Komponentensignale durch die Einrichtung (20) zum Zuordnen zugeordnet werden, und dass in einen zweiten Unterraum (22) als nicht-percussiv festgestellte Komponentensignale zuordenbar sind.

16. Vorrichtung nach einem der vorhergehenden Ansprüche, bei der das Komponentensignal eine Amplitudenhüllkurve ist, bei der die Einrichtung (16) zum Berechnen ausgebildet ist, um als Merkmal eine Percussivität eines Komponentensignals zu verwenden, wobei die Einrichtung (16) zum Berechnen folgende Merkmale aufweist:

eine Einrichtung zum Bereitstellen eines Modellzeitverlaufs für ein Maximum in einem Komponentensignal;
eine Einrichtung zum Verarbeiten des Komponentensignals, derart, daß bei jedem Maximum ein Modellsignal auf der Basis des Modellzeitverlaufs angeordnet wird, so daß sich ein dem Komponentensignal zugeordnetes Modellsignal ergibt; und

eine Einrichtung zum Berechnen einer Ähnlichkeit zwischen dem Modellsignal und dem Komponentensignal, um ein Ähnlichkeitsmaß zu erhalten, das als Merkmal durch die Einrichtung (20) zum Zuordnen verwendbar ist.

17. Vorrichtung nach einem der vorhergehenden Ansprüche, bei der das Komponentensignal ein Amplitudenspektrum ist, bei der die Einrichtung (16) zum Berechnen ausgebildet ist, um als Merkmal eine Rauschartigkeit zu verwenden, wobei die Einrichtung (16) zum Berechnen folgende Merkmale aufweist:

   eine Einrichtung zum Ermitteln von lokalen Maxima in einem Komponentensignal;
   eine Einrichtung zum Verarbeiten des Komponentensignals, derart, daß jedem Maximum ein Gauss-förmiger Impuls zugeordnet wird, um einen Modellsignalverlauf für das Komponentensignal zu erhalten; und
   eine Einrichtung zum Bestimmen einer Ähnlichkeit zwischen dem Spektrum des Komponentensignals und dem Modellsignal, die eine Rauschartigkeit des Komponentensignals angibt.

18. Vorrichtung nach einem der vorhergehenden Ansprüche, bei der die Einrichtung (16) zum Berechnen ausgebildet ist, um für ein statisches Spektrum eines Komponentensignals ein Spektraldissonanzmaß als Merkmal zu berechnen.

19. Vorrichtung nach einem der vorhergehenden Ansprüche,
bei der die Einrichtung (16) zum Berechnen ausgebildet ist, um als Merkmal ein Spektralflachheitsmaß eines statischen Amplitudenspektrums eines Komponentensignals zu berechnen.

20. Vorrichtung nach einem der vorhergehenden Ansprüche, bei der die Einrichtung (16) zum Berechnen ausgebildet ist, um als Merkmal einen Kummulanten dritter Ordnung für ein in den Zeitbereich umgesetztes statisches Amplitudenspektrum eines Komponentensignals zu berechnen.

21. Vorrichtung nach einem der vorhergehenden Ansprüche, bei der eine mehrstufige Entscheidung durch die Einrichtung (20) zum Zuordnen durchführbar ist, wobei eine erste Entscheidungsstufe auf einem Merkmal der Rauschartigkeit basiert, und eine nachgeordnete Entscheidungsstufe auf einem Merkmal der Spektraldissonanz, der Percussivität, des Kummulanten dritter Ordnung oder des Spektralflachheitsmaßes basiert.

22. Vorrichtung nach einem der Ansprüche 2 bis 21, bei der die Einrichtung (26) zum Rekonstruieren ferner ausgebildet ist, um eine bei einer Zerlegung des Informationssignals entfernte Phaseninformation wieder hinzuzufügen, um ein rekonstruiertes Informationssignal für einen Unterraum zu erhalten.

23. Vorrichtung nach einem der Ansprüche 1 bis 22, bei der die Einrichtung (20) zum Zuordnen ausgebildet ist, um auf der Basis von einem oder mehreren Merkmalen eines Komponentensignals dieses einem von mehr als zwei Unterräumen zuzuordnen.

24. Vorrichtung nach Anspruch 2, die ferner eine Einrichtung zum Extrahieren eines Merkmals aus einem rekonstruierten Informationssignal umfaßt, das aus einer Überlagerung von Komponentensignalen in einem Unterraum erzeugbar ist.

25. Vorrichtung nach einem der vorhergehenden Ansprüche, die ferner eine Einrichtung zum Vorverarbeiten des Informationssignals aufweist, um ein Teilsignal in dem Informationssignal hinsichtlich seiner Energie selektiv zu erhöhen.

26. Vorrichtung nach einem der vorhergehenden Ansprüche, bei der die Einrichtung (12) zum Zerlegen ferner ausgebildet ist, um die Komponentensignale vor der Merkmalsextraktion nachzubearbeiten, um Artefakte in einem Komponentensignal, die aus anderen Teilsignalen stammen, zu reduzieren.

27. Verfahren zum Analysieren eines Informationssignals, wobei das Informationssignal ein Audiosignal ist, das aus einer Überlagerung von Teilsignalen besteht, wobei die Teilsignale von Einzelquellen stammen, die zusammen das Audiosignal bilden, mit folgenden Schritten:

   Zerlegen (12) des Informationssignals in mehrere Komponentensignale (14);
   Berechnen (16) eines Merkmals für jedes einzelne Komponentensignal, wobei das Merkmal so definiert ist, dass es mit einer Quellencharakteristik für einen Unterraum und mit einer anderen Quellencharakteristik für einen anderen Unterraum korreliert ist, wobei jedem Unterraum eine oder mehrere Einzelquellen zugeordnet sind, und wobei sich die eine oder die mehreren Einzelquellen, die dem einen Unterraum zugeordnet sind, von der einen oder den mehreren Einzelquellen unterscheiden, die dem anderen Unterraum zugeordnet sind; und

16

Zuordnen (20) der Komponentensignale zu mindestens zwei Unterräumen (21, 22) auf der Basis der Merkmale (18) für die Komponentensignale, so dass der eine Unterraum Komponentensignale umfasst, die der einen oder den mehreren Einzelquellen, die dem einen Unterraum zugeordnet sind, entsprechen, und dass der andere Unterraum Komponentensignale umfasst, die der einen oder den mehreren Einzelquellen, die dem anderen Unterraum zugeordnet sind, entsprechen.

28. Computer-Programm mit einem Programmcode zum Durchführen eines Verfahrens nach Anspruch 27, wenn das Programm auf einem Computer abläuft.

**Claims**

1. Device for analyzing an information signal, wherein the information signal is an audio signal consisting of a superposition of partial signals, wherein the partial signals originate from individual sources together forming the audio signal, wherein the device includes:

   a means (12) for decomposing the information signal into several component signals (14);
   a means (16) for calculating a feature for each individual component signal, wherein the feature is defined so that it is correlated with one source characteristic for one subspace and with another source characteristic for another subspace, wherein one or more individual sources are associated with each subspace, and wherein the one or more individual sources associated with the one subspace differ from the one or more individual sources associated with the other subspace; and
   a means (20) for associating the component signals with at least two subspaces (21, 22) on the basis of the features (18) for the component signals, so that the one subspace includes component signals corresponding to the one or more individual sources associated with the one subspace, and that the other subspace includes component signals corresponding to the one or more individual sources associated with the other subspace.

2. Device according to claim 1, further comprising:

   a means (26) for reconstructing the component signals associated with a subspace to obtain a reconstructed information signal, wherein the reconstructed information signal is based on a partial signal of an individual source or on a superposition of partial signals of a group of individual sources.

3. Device according to claim 1 or 2, wherein the means (12) for decomposing comprises a time-frequency conversion means (12a) to obtain a sequence of short-time spectra from the information signal.

4. Device according to claim 3, wherein the means (12) for decomposing is further designed to calculate a sequence of short-time magnitude spectra as sequence of short-time spectra.

5. Device according to claim 3 or 4, wherein the means (12) for decomposing is designed to perform a singular value decomposition (12b) with the sequence of short-time spectra to obtain singular values indicating the component signals.

6. Device according to claim 5, wherein the means (12b) for decomposing is further designed to select a number of singular values from all obtained singular values whose magnitude is larger than a threshold value.

7. Device according to claim 6, wherein the number of selected singular values is larger than a number of individual sources expected for the information signal.

8. Device according to any of the previous claims, wherein the means (12) for decomposing is designed to determine a component signal as a static amplitude spectrum and an associated time-variable amplitude envelope.

9. Device according to any of the previous claims, wherein the means (16) for calculating is designed to calculate a plurality of different features for a component signal.

10. Device according to claim 9, wherein the means (20) for associating is designed to perform a multistage association, wherein a more reliable feature is usable in a first stage of the association, and wherein a less reliable feature is usable in a second, downstream stage.

**11.** Device according to any of the previous claims, wherein the feature is a quantitative feature, wherein the means (20) for associating is designed to operate on the basis of a quantity of the feature.

**12.** Device according to any of the previous claims, wherein the means (20) for associating is designed to operate using a predetermined threshold, wherein an association of a component signal (14) with a subspace (21, 22) is based on whether the feature for the component signal is larger or smaller than the predetermined threshold.

**13.** Device according to any of the previous claims, wherein the means (16) for calculating is designed to calculate a feature which is meaningful with respect to an association of an individual source with a type of sound generators.

**14.** Device according to claim 13, wherein the information signal includes a music signal and the means (16) for calculating is designed to use a feature which is meaningful with respect to a type of music instruments.

**15.** Device according to any of the previous claims, wherein the individual sources include non-percussive and percussive individual sources, wherein the means (16) for calculating is designed to use a feature as feature that is correlated with a percussiveness of a component signal, so that component signals found percussive are associated with a first subspace by the means (20) for associating, and that component signals found non-percussive are associatable into a second subspace (22).

**16.** Device according to any of the previous claims, wherein the component signal is an amplitude envelope, wherein the means (16) for calculating is designed to use a percussiveness of a component signal as feature, wherein the means (16) for calculating comprises:

a means for providing a model time curve for a maximum in a component signal;
a means for processing the component signal such that a model signal is arranged at each maximum on the basis of the model time curve, so that the result is a model signal associated with the component signal; and
a means for calculating a similarity between the model signal and the component signal to obtain a similarity measure which is usable as feature by the means (20) for associating.

**17.** Device according to any of the previous claims, wherein the component signal is an amplitude spectrum, wherein the means (16) for calculating is designed to use a noise-likeness as feature, wherein the means (16) for calculating comprises:

a means for determining local maxima in a component signal;
a means for processing the component signal such that a Gaussian-shaped impulse is associated with each maximum to obtain a model waveform for the component signal; and
a means for determining a similarity between the spectrum of the component signal and the model signal giving a noise-likeness of the component signal.

**18.** Device according to any of the previous claims, wherein the means (16) for calculating is designed to calculate a spectral dissonance measure as feature for a static spectrum of a component signal.

**19.** Device according to any of the previous claims,
wherein the means (16) or calculating is designed to calculate a spectral flatness measure of a static amplitude spectrum of a component signal as feature.

**20.** Device according to any of the previous claims, wherein the means (16) for calculating is designed to calculate a third order cumulant for a static amplitude spectrum of a component signal converted to the time domain as feature.

**21.** Device according to any of the previous claims, wherein a multistage decision is performable by the means (20) for associating, wherein a first decision stage is based on a feature of noise-likeness, and a downstream decision stage is based on a feature of spectral dissonance, percussiveness, third order cumulant or spectral flatness measure.

**22.** Device according to any of claims 2 to 21, wherein the means (26) for reconstructing is further designed to re-add phase information removed in a decomposition of the information signal to obtain a reconstructed information signal for a subspace.

**23.** Device according to any of claims 1 to 22, wherein the means (20) for associating is designed to associate a component signal with one of more than two subspaces on the basis of one or more features of the same.

24. Device according to claim 2, further including a means for extracting a feature from a reconstructed information signal which is generatable from a superposition of component signals in a subspace.

25. Device according to any of the previous claims, further comprising a means for pre-processing the information signal to selectively increase a partial signal in the information signal with respect to its energy.

26. Device according to any of the previous claims, wherein the means (12) for decomposing is further designed to post-process the component signals prior to the feature extraction to reduce artifacts in a component signal coming from other partial signals.

27. Method for analyzing an information signal, wherein the information signal is an audio signal consisting of a superposition of partial signals, wherein the partial signals originate from individual sources together forming the audio signal, the method comprising:

decomposing (12) the information signal into several component signals (14);
calculating (16) a feature for each individual component signal, wherein the feature is defined so that it is correlated with one source characteristic for one subspace and with another source characteristic for another subspace, wherein one or more individual sources are associated with each subspace, and wherein the one or more individual sources associated with the one subspace differ from the one or more individual sources associated with the other subspace; and
associating (20) the component signals with at least two subspaces (21, 22) on the basis of the features (18) for the component signals, so that the one subspace includes component signals corresponding to the one or more individual sources associated with the one subspace, and that the other subspace includes component signals corresponding to the one or more individual sources associated with the other subspace.

28. Computer program with a program code for performing a method according to claim 27, when the program runs on a computer.

**Revendications**

1. Dispositif d'analyse d'un signal d'information, le signal d'information étant un signal audio consistant en une superposition de signaux partiels, les signaux partiels provenant de sources individuelles formant, ensemble, le signal audio, le dispositif contenant :

un dispositif (12) destiné à décomposer le signal d'information en plusieurs signaux à composantes (14) ;
un dispositif (16) destiné à calculer une caractéristique pour chaque signal à composantes individuel, la caractéristique étant définie de sorte qu'elle soit corrélée avec une caractéristique de source pour un sous-espace et avec une autre caractéristique de source pour un autre sous-espace, à chaque sous-espace étant associées une ou plusieurs sources individuelles, et l'une ou les plusieurs sources individuelles associées à l'un sous-espace étant différentes de l'une ou des plusieurs sources individuelles associées à l'autre sous-espace ;
un dispositif (20) destiné à associer les signaux à composantes à au moins deux sous-espaces (21, 22) sur base des caractéristiques (18) pour les signaux à composantes, de sorte que l'un sous-espace comporte des signaux à composantes correspondant à l'une ou aux plusieurs sources individuelles associées à l'un sous-espace et que l'autre sous-espace comporte des signaux à composantes correspondant à l'une ou aux plusieurs sources individuelles associées à l'autre sous-espace.

2. Dispositif selon la revendication 1, présentant, par ailleurs, la caractéristique suivante :

un dispositif (26) destiné à reconstruire les signaux à composantes associés à l'un sous-espace, pour obtenir un signal d'information reconstruit, le signal d'information reconstruit étant basé sur un signal partiel d'une source individuelle ou sur une superposition de signaux partiels d'un groupe de sources individuelles.

3. Dispositif selon la revendication 1 ou 2, dans lequel le dispositif (12) destiné à décomposer présente un dispositif de conversion temps-fréquence (12a), pour obtenir à partir du signal d'information une succession de spectres de courte durée.

**4.** Dispositif selon la revendication 3, dans lequel le dispositif (12) destiné à décomposer est, par ailleurs, réalisé de manière à calculer, comme succession de spectres de courte durée, une succession de spectres de valeur de courte durée.

**5.** Dispositif selon la revendication 3 ou 4, dans lequel le dispositif (12) destiné à décomposer est réalisé de manière à effectuer une décomposition en valeurs singulières (12b) avec la succession de spectres de courte durée, pour obtenir des valeurs singulières qui renvoient aux signaux à composantes.

**6.** Dispositif selon la revendication 5, dans lequel le dispositif (12) destiné à décomposer est, par ailleurs, réalisé de manière à sélectionner un nombre de valeurs singulières parmi toutes les valeurs singulières obtenues dont la valeur est supérieure à une valeur de seuil.

**7.** Dispositif selon la revendication 6, dans lequel le nombre de valeurs singulières sélectionnées est supérieur à un nombre de sources individuelles attendu pour le signal d'information.

**8.** Dispositif selon l'une des revendications précédentes, dans lequel le dispositif (12) destiné à décomposer est réalisé de manière à déterminer un signal à composantes comme spectre d'amplitudes statique et une courbe enveloppante d'amplitudes variables dans le temps y relative.

**9.** Dispositif selon l'une des revendications précédentes, dans lequel le dispositif (16) destiné à calculer est réalisé de manière à calculer, pour un signal à composantes, une pluralité de caractéristiques différentes.

**10.** Dispositif selon la revendication 9, dans lequel le dispositif (20) destiné à associer est réalisé de manière à effectuer une association à plusieurs étapes, une caractéristique plus fiable pouvant être utilisée dans une première étape de l'association, et une caractéristique moins fiable pouvant être utilisée dans une deuxième étape successive.

**11.** Dispositif selon l'une des revendications précédentes, dans lequel la caractéristique est une caractéristique quantitative, le dispositif (20) destiné à associer étant réalisé de manière à fonctionner sur base d'une quantité de la caractéristique.

**12.** Dispositif selon l'une des revendications précédentes, dans lequel le dispositif (20) destiné à associer est réalisé de manière à fonctionner à l'aide d'un seuil prédéterminé, une association d'un signal à composantes (14) à un sous-espace (21, 22) étant basée sur le fait que la caractéristique pour le signal à composantes est supérieure ou inférieure au seuil prédéterminé.

**13.** Dispositif selon l'une des revendications précédentes, dans lequel le dispositif (16) destiné à calculer est réalisé de manière à calculer une caractéristique qui est expressive en ce qui concerne l'appartenance d'une source individuelle à un type de générateurs de son.

**14.** Dispositif selon la revendication 13, dans lequel le signal d'information comprend un signal musical et le dispositif (16) destiné à calculer est réalisé de manière à utiliser une caractéristique qui est expressive en ce qui concerne un type d'instruments de musique.

**15.** Dispositif selon l'une des revendications précédentes, dans lequel les sources individuelles comprennent des sources individuelles non percussives et percussives, le dispositif (16) destiné à calculer est réalisé de manière à utiliser comme caractéristique une caractéristique corrélée avec une percussivité d'un signal à composantes, de sorte qu'à un premier sous-espace soient associés par le dispositif (20) destiné à associer des signaux à composantes constatés comme étant percussifs et que dans un deuxième sous-espace (22) puissent être associés des signaux à composantes constatés comme étant non-percussifs.

**16.** Dispositif selon l'une des revendications précédentes, dans lequel le signal à composantes est une courbe enveloppante d'amplitudes, dans lequel le dispositif (16) destiné à calculer est réalisé de manière à utiliser comme caractéristique une percussivité d'un signal à composantes, le dispositif (16) destiné à calculer présentant les caractéristiques suivantes :

un dispositif destiné à préparer une évolution dans le temps modèle pour un maximum dans un signal à composantes ;
un dispositif destiné à traiter le signal à composantes de sorte qu'à chaque maximum soit disposé un signal modèle sur base de l'évolution dans le temps modèle, de sorte qu'il s'ensuive un signal modèle associé au signal à composantes ; et

un dispositif destiné à calculer une similitude entre le signal modèle et le signal à composantes, pour obtenir une mesure de similitude pouvant être utilisée comme caractéristique par le dispositif (20) destiné à associer.

**17.** Dispositif selon l'une des revendications précédentes, dans lequel le signal à composantes est un spectre d'amplitudes, dans lequel le dispositif (16) destiné à calculer est réalisé de manière à utiliser comme caractéristique une qualité de type bruit, le dispositif (16) destiné à calculer présentant les caractéristiques suivantes :

un dispositif destiné à déterminer des maxima locaux dans un signal à composantes ;

un dispositif destiné à traiter le signal à composantes de sorte qu'à chaque maximum soit associée une impulsion de forme gaussienne, pour obtenir une évolution de signal modèle pour le signal à composantes ; et

un dispositif destiné à déterminer une similitude entre le spectre du signal à composantes et le signal modèle qui indique une qualité de type bruit du signal à composantes.

**18.** Dispositif selon l'une des revendications précédentes, dans lequel le dispositif (16) destiné à calculer est réalisé de manière à calculer, pour un spectre statique d'un signal à composantes, une mesure de dissonance spectrale comme caractéristique.

**19.** Dispositif selon l'une des revendications précédentes,
dans lequel le dispositif (16) destiné à calculer est réalisé de manière à calculer comme caractéristique une mesure de planéité spectrale d'un spectre d'amplitudes statique d'un signal à composantes.

**20.** Dispositif selon l'une des revendications précédentes, dans lequel le dispositif (16) destiné à calculer est réalisé de manière à calculer comme caractéristique un cumulant de troisième ordre pour un spectre d'amplitudes statique converti au domaine du temps d'un signal à composantes.

**21.** Dispositif selon l'une des revendications précédentes, dans lequel une décision à plusieurs étapes peut être effectuée par le dispositif (20) destiné à associer, une première étape de décision étant basée sur une caractéristique de qualité de type bruit, et une étape de décision successive étant basée sur une caractéristique de dissonance spectrale, de percussivité, du cumulant de troisième ordre ou de la mesure de planéité spectrale.

**22.** Dispositif selon l'une des revendications 2 à 21, dans lequel le dispositif (26) destiné à reconstruire est, par ailleurs, réalisé de manière à ajouter à nouveau une information de phase éliminée lors d'une décomposition du signal d'information, pour obtenir un signal d'information reconstruit pour un sous-espace.

**23.** Dispositif selon l'une des revendications 1 à 22, dans lequel le dispositif (20) destiné à associer est réalisé de manière à associer, sur base d'une ou de plusieurs caractéristiques d'un signal à composantes, cette dernière à l'un parmi plus de deux sous-espaces.

**24.** Dispositif selon la revendication 2, comprenant, par ailleurs, un dispositif destiné à extraire une caractéristique d'un signal d'information reconstruit pouvant être généré à partir d'une superposition de signaux à composantes dans un sous-espace.

**25.** Dispositif selon l'une des revendications précédentes, présentant, par ailleurs, un dispositif destiné à prétraiter le signal d'information, pour augmenter sélectivement un signal partiel dans le signal d'information en ce qui concerne son énergie.

**26.** Dispositif selon l'une des revendications précédentes, dans lequel le dispositif (12) destiné à décomposer est, par ailleurs, réalisé de manière à post-traiter les signaux à composantes avant l'extraction de caractéristique, afin de réduire les artifices dans un signal à composantes provenant d'autres signaux partiels.

**27.** Procédé pour analyser un signal d'information, le signal d'information étant un signal audio consistant en une superposition de signaux partiels, les signaux partiels provenant de sources individuelles formant, ensemble, le signal audio, aux étapes suivantes consistant à :

décomposer (12) le signal d'information en plusieurs signaux à composantes (14) ;

calculer (16) une caractéristique pour chaque signal à composantes individuel, la caractéristique étant définie de sorte qu'elle soit corrélée avec une caractéristique de source pour un sous-espace et avec une autre caractéristique de source pour un autre sous-espace, à chaque sous-espace étant associées une ou plusieurs sources individuelles, et l'une ou les plusieurs sources individuelles associées à l'un sous-espace étant différentes de l'une ou des plusieurs sources individuelles associées à l'autre sous-espace ; et

associer (20) les signaux à composantes à au moins deux sous-espaces (21, 22) sur base des caractéristiques (18) pour les signaux à composantes, de sorte que l'un sous-espace comporte des signaux à composantes correspondant à l'un ou aux plusieurs sources individuelles associées à l'un sous-espace, et que l'autre sous-espace comporte des signaux à composantes correspondant à l'un ou aux plusieurs sources individuelles associées à l'autre sous-espace.

28. Programme d'ordinateur avec un code de programme pour l'exécution d'un procédé selon la revendication 27 lorsque le programme se déroule sur un ordinateur.

# FIG 1

INFORMATIONSSIGNAL AUS
MEHREREN EINZELQUELLEN

10

| EINRICHTUNG ZUM ZERLEGEN | 12 |

14 →   KS$_1$  KS$_2$   · · ·   KS$_i$ · · ·   KS$_n$

| EINRICHTUNG ZUR KOMPONENTENWEISEN MERKMALSBERECHNUNG | 16 |

18 →   MM$_1$   MM$_2$   · · ·   MM$_i$ · · ·   MM$_n$

| EINRICHTUNG ZUM ZUORDNEN | 20 |

21   UNTERRAUM 1
(KS$_1$, KS$_i$,...)

· · ·

UNTERRAUM j
(KS$_2$,..., KS$_n$)   22

(PERKUSSIV)

(NICHT PERKUSSIV
BZW.HARMONISCH
AUSGEHALTEN)

# FIG 2

- PCM-AUDIO-SIGNAL — 10
- 12A
- $X$
- SVD — 12B
- $\overline{X}$
- ZERLEGEN/ICA — 12C
- EXTRAKTION / KLASSIFIKATION
- $p$ — 21
- 22 — $h$ — 20
- REKONSTRUKTION
- 26
- $\Phi$
- $E$
- $F$

E: ZEITL. VARIIERENDE HÜLLKURVEN

F: STATISCHES AMPLITUDEN-SPEKTRUM

1. REKONSTR. INFORMATIONS-SIGNAL (PERKUSSIVER TRACK)

1. REKONSTR. INFORMATIONS-SIGNAL (HARMONISCH-AUSGEHAL-TENER TRACK)

# FIG 3A

ZEITVERÄNDERL.
HÜLLKURVE

—— AMPL.-HÜLLKURVE
--- MODELL
FÜR
HARMONISCH-AUSGEH.
KOMPONENTENSIGNAL

# FIG 3B

ZEITVERÄND.
HÜLLKURVE

—— AMPL.-HÜLLKURVE
--- MODELL
FÜR PERKUSSIVES
KOMPONENTENSIGNAL

## FIG 4A

STATISCHES
SPEKTRUM

AMPLITUDE

FREQUENZ

—— FREQUENZ-
VEKTOR
---- MODELL-
VEKTOR

FÜR HARMONISCH-
AUSGEHALTENES
KOMPONENTEN-
SIGNAL

## FIG 4B

STATISCHES
SPEKTRUM

AMPLITUDE

FREQUENZ

—— FREQUENZ-
VEKTOR
---- MODELL-
VEKTOR

FÜR PERKUSSIVES
KOMPONENTEN-
SIGNAL